# EUROPEAN PATENT APPLICATION

(11) **EP 4 770 170 A1**
(43) Date of publication of application: **01.07.2026**
(21) Application number: 23949354.7
(22) Date of filing: 21.08.2023
(51) Int. Cl.: H04W 24/02

(54) **METHOD FOR WIRELESS COMMUNICATION, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); GUO, Yali, Dongguan, Guangdong 523860 (CN)
(74) Representative: RGTH
(86) International application number: PCT/CN2023/114035
(87) International publication number: WO 2025/039160

(57) **Abstract**

Provided are a method for wireless communication, and a communications device. The method for wireless communication comprises: a first communications device acquires first information, the first information being used for indicating an association relationship between data packets in a first data set.

## Description

### TECHNICAL FIELD

This application relates to the field of communications technologies, and more specifically, to a method for wireless communication and a communications device.

### BACKGROUND

To optimize resource configuration, some communications systems introduce integrated handling of a data set. For example, a new radio (new radio, NR) system introduces a protocol packet data unit (packet data unit set, PDU) set based quality of service (quality of service, QoS) flow parameter to implement integrated handling of a data set. However, a data set based QoS parameter introduced in a related technology may not be applicable. Therefore, how to perform integrated handling on a data set is an urgent problem to be solved.

### SUMMARY

This application provides a method for wireless communication and a communications device. The following describes the aspects related to this application.

According to a first aspect, a method for wireless communication is provided, and the method includes: acquiring, by a first communications device, first information, where the first information is used for indicating an association relationship between data packets in a first data set.

According to a second aspect, a method for wireless communication is provided, and the method includes: transmitting, by a second communications device, first information to a first communications device, where the first information is used for indicating an association relationship between data packets in a first data set.

According to a third aspect, a method for wireless communication is provided, and the method includes: transmitting, by a first communications device, fourth information to a fourth communications device, where the fourth information is used for indicating packet loss information for a first data set.

According to a fourth aspect, a method for wireless communication is provided, and the method includes: receiving, by a fourth communications device, fourth information transmitted by a first communications device, where the fourth information is used for indicating packet loss information for a first data set.

According to a fifth aspect, a communications device is provided, and the communications device is a first communications device. The communications device includes an acquisition module, configured to acquire first information, where the first information is used for indicating an association relationship between data packets in a first data set.

According to a sixth aspect, a communications device is provided, where the communications device is a second communications device. The communications device includes: a first transmitting module, configured to transmit first information to a first communications device, where the first information is used for indicating an association relationship between data packets in a first data set.

According to a seventh aspect, a communications device is provided, where the communications device is a first communications device. The communications device includes a transmitting module, configured to transmit fourth information to a fourth communications device, where the fourth information is used for indicating packet loss information for a first data set.

According to an eighth aspect, a communications device is provided, where the communications device is a second communications device. The communications device includes a receiving module, configured to receive fourth information transmitted by a first communications device, where the fourth information is used for indicating packet loss information for a first data set.

According to a ninth aspect, a communications device is provided, and the communications device includes a processor, a memory, and a communications interface, where the memory is configured to store one or more computer programs, and the processor is configured to invoke the computer program in the memory, to cause the communications device to execute some or all of the steps in the method according to any one of the first aspect to the fourth aspect.

According to a tenth aspect, an embodiment of this application provides a communications system, and the system includes the communications device described above. In another possible design, the system may further include another device that interacts with the communications device in the solution provided in embodiments of this application.

According to an eleventh aspect, an embodiment of this application provides a computer-readable storage medium. The computer-readable storage medium stores a computer program, and the computer program causes a computer to execute some or all of the steps of the methods according to the foregoing aspects.

According to a twelfth aspect, an embodiment of this application provides a computer program product. The computer program product includes a non-transitory computer-readable storage medium that stores a computer program, and the computer program is operable to cause a computer to execute some or all of the steps of the methods according to the foregoing aspects. In some implementations, the computer program product may be a software installation package.

According to a thirteenth aspect, an embodiment of this application provides a chip, where the chip includes a memory and a processor, and the processor may invoke a computer program from the memory and run the computer program, to implement some or all of the steps in the methods according to the foregoing aspects.

In embodiments of this application, a first communications device can acquire first information, that is, acquire related information indicating an association relationship between data packets in a first data set. In this way, the first communications device may perform integrated handling on the first data set based on the first information to optimize resource configuration.

### BRIEF DESCRIPTION OF DRAWINGS

FIG. 1 is an example diagram of a system architecture of a wireless communications system to which embodiments of this application are applicable.
FIG. 2 is an example diagram of another system architecture of a wireless communications system to which embodiments of this application are applicable.
FIG. 3 is a schematic flowchart of a method for wireless communication according to Embodiment 1.
FIG. 4 is a schematic flowchart of another method for wireless communication according to Embodiment 1.
FIG. 5 is a schematic flowchart of still another method for wireless communication according to Embodiment 1.
FIG. 6 is a schematic flowchart of still another method for wireless communication according to Embodiment 1.
FIG. 7 is a schematic flowchart of still another method for wireless communication according to Embodiment 1.
FIG. 8 is a schematic flowchart of still another method for wireless communication according to Embodiment 1.
FIG. 9 is a schematic flowchart of still another method for wireless communication according to Embodiment 1.
FIG. 10 is a schematic flowchart of still another method for wireless communication according to Embodiment 1.
FIG. 11 is a schematic flowchart of still another method for wireless communication according to Embodiment 1.
FIG. 12 is a schematic flowchart of a method for wireless communication according to Embodiment 2.
FIG. 13 is a schematic flowchart of another method for wireless communication according to Embodiment 2.
FIG. 14 is a schematic flowchart of still another method for wireless communication according to Embodiment 2.
FIG. 15 is a schematic flowchart of still another method for wireless communication according to Embodiment 2.
FIG. 16 is a schematic diagram of a structure of a communications device according to Embodiment 1.
FIG. 17 is a schematic diagram of a structure of another communications device according to Embodiment 1.
FIG. 18 is a schematic diagram of a structure of a communications device according to Embodiment 2.
FIG. 19 is a schematic diagram of a structure of another communications device according to Embodiment 2.
FIG. 20 is a schematic diagram of a structure of a communications apparatus according to an embodiment of this application.

### DESCRIPTION OF EMBODIMENTS

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access ( wideband code division multiple access, WCDMA) system, general packet radio service (general packet radio service, GPRS), a long-term evolution (long term evolution, LTE) system, an advanced long-term evolution (advanced long term evolution, LTE-A) system, an LTE frequency division duplex (frequency division duplex, FDD) system, an LTE time division duplex (time division duplex, TDD) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (non-terrestrial networks, NTN) system, a terrestrial networks (terrestrial networks, TN) system, a universal mobile telecommunications system (universal mobile telecommunication system, UMTS), a wireless local area networks (wireless local area networks, WLAN) system, a wireless fidelity (wireless fidelity, WIFI) system, and a 5th-generation (5th-generation, 5G) system. The technical solutions provided in this application may be further applied to another communications system, such as a future communications system, for example, a 6th generation mobile communications system, for another example, a satellite communication system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle-to-everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a dedicated spectrum.

An important feature of a communications system architecture (such as a 5G system architecture) is that the communications system architecture may be a service-oriented architecture, that is, a network element (service provider) in a core network may provide a specific service, and is invoked by another network element (consumer) by using a defined API interface.

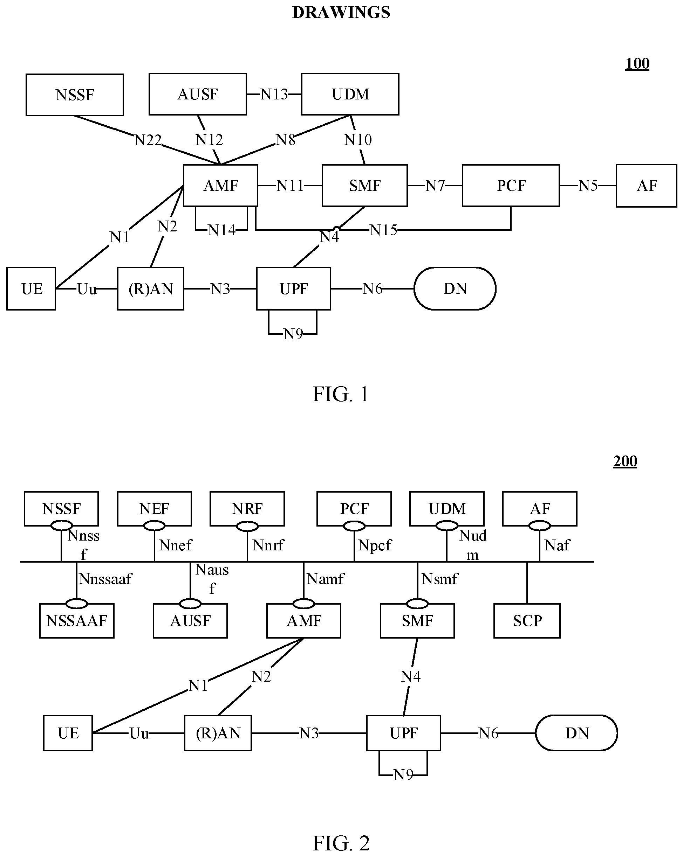

FIG. 1 and FIG. 2 are example diagrams of system architectures of a wireless communications system to which embodiments of this application are applicable. For example, the communications system is a 5G system architecture. The wireless communications system may include a plurality of network elements, such as a terminal device, an access network (access network, AN) device, a user plane function (user plane function, UPF) network element, an access and mobility management function (access and mobility management function, AMF) network element, a session management function (session management function, SMF) network element, a policy control function (policy control function, PCF) network element, and an application function (application function, AF) network element. The wireless communications system may further include a data network (data network, DN), or the like.

The following provides examples to describe functions of various parts or network elements involved in the wireless communications system in a 5G network.

Terminal device: The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Access network device: The access network device may be configured to provide a network access function for an authorized terminal device in a specific area, and can use transmission channels of different quality according to a level, a service requirement, and the like of the terminal device. The access network device can manage a wireless resource, and provide an access service for the terminal device, to complete forwarding of a control signal and data between the terminal device and a core network.

The access network device may be a device in a wireless network. The access network device may also be referred to as a radio access network (radio access network, RAN) device or a network device. For example, the access network device may be a base station. The access network device in embodiments of this application may refer to a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device form factor used by the access network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the access network device in embodiments of this application may be a CU or a DU, or the access network device includes a CU and a DU. The gNB may further include an AAU.

The access network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the access network device and the terminal device are located is not limited.

UPF network element: The UPF is a user plane function in the core network, and may be responsible for forwarding and receiving of user data (for example, a service data flow) in the terminal device. The UPF may be connected to the access network device (such as a base station) and an external data network for performing data transmission. For example, the UPF may receive user data from the DN, and transmit the user data to the terminal device by using the access network device. Alternatively, the UPF may receive user data from the terminal device by using the access network device, and then forward the user data to the DN. A transmission resource and a scheduling function in the UPF that provide a service for the terminal device are managed and controlled by the SMF. In some embodiments, the UPF may be divided into an intermediate UPF (intermediate-UPF, I-UPF) and an anchor UPF (anchor-UPF, A-UPF). The I-UPF is connected to an access network, the A-UPF is a UPF of a session anchor, and the A-UPF may also be referred to as a PDU session anchor (PDU session anchor, PSA).

AMF network element: The AMF is a mobility management function in the core network, and may be configured to implement all functions of a mobility management network element (mobility management entity, MME), such as lawful interception or access authorization (or authentication), with the exception of session management. In some embodiments, in addition to performing mobility management on the terminal device, the AMF may be further responsible for forwarding a message related to session management between the terminal device and the SMF.

SMF network element: The SMF is a session management function in the core network, and is mainly responsible for session management, internet protocol (internet protocol, IP) address allocation and management of the terminal device, selection of a manageable user plane function, policy control, or a termination point of a charging function interface, downlink data notification, configuration of routing information for a user plane function, and the like.

PCF network element: The PCF is a policy management function in the core network, and may be responsible for formulation of policies related to mobility management, session management, charging, and the like of the terminal device. Specifically, the PCF may provide policy rule information and the like for a functional network element (for example, the AMF network element or the SMF network element) on a control plane, to manage and control mobility management, session management, and the like of the terminal device.

AF network element: The AF mainly supports interaction with a 3rd generation partnership project (3rd generation partnership project, 3GPP) core network to provide services, for example, affecting a data routing decision, a policy control function, or providing a network side with some services of a third party. In other words, the AF may be mainly configured to transfer a requirement of an application side on the network side. In some embodiments, the AF may be an internal application of an operator, such as an IP multimedia subsystem (IP multimedia subsystem, IMS) technology. In some embodiments, the AF may be understood as a third-party server, for example, an application server on an internet, which provides related service information, including providing the PCF with quality of service (quality of service, QoS) requirement information corresponding to a service, and transmitting user plane data information of a service to an A-UPF. In some embodiments, the AF may alternatively be a content provider (content provider, CP). In some embodiments, if the AF is an internal AF of an operator, and is within a same trusted domain as other network functions (network function, NF), the AF may directly interact with and access other NFs. If the AF is not within the trusted domain, the AF is required to access other NFs through other network elements (for example, the NEF network element mentioned below).

DN: The DN refers to a network that may be used to provide transmission data. The DN may be a private network such as a local area network, may be an external network that is not managed and controlled by an operator, such as the Internet (internet), or may be a special-purpose network deployed by all operators, such as a network providing an IMS service.

It should be understood that the foregoing network elements in the core network may also be referred to as functional entities, which is not limited in this application. For example, the UPF network element may also be referred to as a UPF entity, and the AMF network element may also be referred to as an AMF entity. It should also be understood that in some embodiments, the xx network element or the xx functional entity may also be directly referred to as the xx, for example, the UPF network element (or the UPF entity) may be referred to as the UPF, and the AMF network element (or the AMF entity) may be referred to as the AMF. For ease of description, the xx (for example, the UPF or the AMF) mentioned in embodiments of this application may refer to the xx network element or the xx entity. Details are not described again below.

Optionally, the wireless communications system may further include other network elements such as a unified data management (unified data management, UDM) network element, an authentication server function (authentication server function, AUSF) network element, a network slice selection function (network slice selection function, NSSF) network element, a network exposure function (network exposure function, NEF) network element, and a network data analytics function (network data analytics function, NWDAF) network element, which is not limited in embodiments of this application.

The UDM network element is a subscription database in the core network, and may be used for functions such as generating and storing subscription data of a user in a network (for example, a 5G network) and managing authentication data. The UDM network element may support interaction with an external third-party server. The AUSF network element may be configured to: receive an identity authentication request for the terminal device from the AMF, request a key from the UDM, and then forward the delivered key to the AMF for authentication processing. The NSSF network element may be used for network slice selection. The NEF network element may be responsible for managing exposure of network data by a 5G network element. An external untrusted application is required to access internal data of the core network through the NEF, to ensure security of a 3GPP network. In some embodiments, the NEF network element may further provide functions such as QoS capability exposure for external applications, event subscription, and AF request distribution. The NWDAF network element may collect data from various network elements and network management systems of the core network, to perform big data statistics, analysis, or intelligent data analysis, so as to obtain a network side analysis result or network side prediction data, thereby assisting the various network elements in implementing more effective control on the terminal device based on data analysis results.

In the wireless communications systems 100 shown in FIG. 1 and FIG. 2, the parts or network elements may communicate with each other by using interfaces. For example, the terminal device may perform an access stratum connection with the AN by using a Uu interface, and exchange transmission of an access stratum message and wireless data. The terminal device may perform a non-access stratum (none access stratum, NAS) connection with the AMF by using an N1 interface, and exchange a NAS message. The AN may be connected to the AMF by using an N2 interface, to transfer radio bearer control information from the core network side to the AN, or the like. The UPF may perform data transmission with the AN by using an N3 interface, and perform data transmission with the DN by using an N6 interface, and the like. For interfaces used to connect other parts or network elements, reference may be made to FIG. 1 and FIG. 2. Details are not described herein again.

It should be understood that the names, such as the terminal device, the access network device, the SMF, the PCF, and names of other network elements shown in FIG. 1 and FIG. 2 constitute no limitations on the devices. In a 5G network and another network in the future, network elements corresponding to the terminal device, the access network device, the SMF, the PCF, and the like may also be expressed with other names. This is not specifically limited in embodiments of this application.

It should be understood that, the foregoing communications systems are described by using 5G systems as an example. Certainly, this application is also applicable to another 3GPP communications system, for example, a 4G communications system, or a future 3GPP communications system, which is not limited in embodiments of this application.

It should be understood that all or some of functions of the communications device in this application may alternatively be implemented by software functions running on hardware, or by virtualization functions instantiated on a platform (for example, a cloud platform).

It should be understood that the system architecture described in embodiments of this application is intended to describe the technical solutions in embodiments of this application more clearly, and does not constitute any limitation on the technical solutions provided in embodiments of this application. It may be learned by a person skilled in the art that, with evolution of a network architecture, embodiments of this application may also be applicable to similar technical problems.

### Data set handling

Data set handling may be understood as data set based handling or integrated handling performed on a data set. In other words, the data set handling may refer to data set handling performed by using a data set as a granularity. For example, the data set handling may include discarding a data set; determining, based on a packet loss status of the data set, whether to transmit a remaining data packet in the data set, and the like.

In some embodiments, the data set may refer to a PDU set. One or more PDUs carrying an application layer information element (information element, IE) may form one PDU set. Alternatively, one PDU set may include one or more PDUs, and the one or more PDUs correspond to an application layer IE. An application layer IE is not limited in embodiments of this application. For example, the application layer IE may be a video frame, a slice, or the like.

In some embodiments, all PDUs in a PDU set may be transmitted in one QoS flow. Therefore, in some embodiments, data set handling may also be referred to as or replaced with QoS data set handling.

In a case that the data set refers to a PDU set, data set handling may include one or more of the following: PDU set based handling performed on the PDU set, integrated handling performed on the PDU set, handling by using a PDU set as a granularity, QoS handling performed on the PDU set, or the like.

To support data set based handling, some communications systems introduce a data set based parameter. In an example of an NR system, the NR system introduces a PDU set based QoS parameter to support PDU set based QoS handling. The following describes a data set based parameter introduced by a communications system.

In an implementation, the communications system introduces a parameter, that is, PDU set integrated handling information (PDU set integrated handling information, PSIHI) to indicate whether all data packets in a data set are indispensable to a receive end at an application layer. For example, the PSIHI may indicate that all data packets in a data set are indispensable to a receive end at an application layer, that is, there is an association relationship or a dependency relationship between data packets in the data set. In this case, when a data packet in the data set is lost, another data packet in the data set cannot be successfully decoded even if the another data packet is successfully received by the receive end. When the PSIHI is introduced, a communications node (such as an access network device) that transmits the data set may determine, based on the PSIHI and in combination with a packet loss status of a data packet in the data set, whether the another data packet in the data set needs to be transmitted to a next communications node.

In another implementation, the communications system may extend the concept of the PSIHI. For example, the communications system may introduce a PDU set content ratio (PDU set content ratio, PSCR) as a data set based QoS parameter. In some embodiments, the PSCR may be used for indicating availability of a data set or indicating tolerance of a receive end to packet loss in a data set, that is, the PSCR may be used for indicating that the entire data set may be considered as available when the data in a data set that is correctly transmitted to the receive end exceeds X% bits.

In some embodiments, the PSCR may be applied to a scenario in which a forward error correction (forward error correction, FEC) is used at an application layer. In other words, when the FEC is used at the application layer, the PSCR may be used for indicating that the application layer may tolerate X% errors. The FEC is described below.

### FEC

An FEC technology is a technology for controlling transmission errors in a communications system, in which error recovery is performed by transmitting original data and additional information, to reduce a bit error rate. A transmit end may generate, based on configured redundancy, a corresponding quantity of repair data packets (or referred to as redundant data packets) from original data packets (or referred to as source data packets, normal data packets, or the like), and transmit the generated repair data packets and the original data packets to a receive end. After receiving the data packets, the receive end may restore, based on the received repair data packets and the received original data packets, a data packet lost during transmission.

The FEC may include a plurality of types. For example, the FEC may include in-band FEC and out-of-band FEC.

In a case that the in-band FEC technology is used to correct an error, when transmitting data, the transmit end may add repair data (or referred to as redundant data) to original data, so that the receive end detects and corrects an error in transmission based on the received repair data. In an implementation, the in-band FEC may be built into an OPUS encoder to generate repair data (or referred to as a repair data packet), so that the receive end detects and corrects an error in transmission based on the generated repair data.

In some embodiments, repair data of audio data may be generated by using the in-band FEC. For example, repair data of audio data in web real-time communication (web real-time communication, WebRTC) may be generated by using in-band FEC built in an OPUS encoder. The OPUS encoder supports an in-band FEC function. After FEC is used, a repair data packet may be generated based on a packet loss rate, thereby improving an anti-packet loss capability of an original data packet. In an implementation, when transmitting a current data packet by the transmit end, the current data packet may be transmitted together with content of a previous data packet, but a repair data packet of the previous data packet is generated by using low bit rate coding. In some embodiments, an OPUS decoder supports packet loss concealment, and a principle of the packet loss concealment is as follows: based on a characteristic that voice signals have a short-term similarity, a currently lost voice frame is reconstructed and predicted by performing signal analysis on the normal or recovered voice signals of its previous frame.

Because the in-band FEC repair data is added to the original data, the in-band FEC occupies part of code bit rate, resulting in reduced quality of transmitted information (such as audio and video quality).

When an out-of-band FEC technology is used to correct an error, before transmitting data, the transmit end may perform coding on the data to generate repair data, and then separately transmit the generated repair data and the original data to the receive end. Different from that in the in-band FEC, the repair data generated by using the out-of-band FEC is not carried in the original data, but is separate from the original data. Thus, the transmit end needs to separately transmit the repair data and the original data to the receive end.

The out-of-band FEC may include different types. For example, the out-of-band FEC may include an uneven level protection FEC (uneven level protection FEC, ULPFEC), a flexible FEC (flexible FEC, FLEXFEC), and the like.

In some embodiments, repair data for video data may be generated by using out-of-band FEC (for example, ULPFEC, or FLEXFEC). For example, repair data for video data in WebRTC may be generated by using the out-of-band FEC.

Because the repair data of the out-of-band FEC is not carried in the original data, the out-of-band FEC does not occupy a code bit rate of the data, and does not affect quality of transmitted information (for example, audio and video quality). However, FEC occupies additional network bandwidth.

There are a plurality of coding schemes for FEC. Typical coding schemes include an exclusive OR (XOR) coding scheme and a Reed Solomon (Reed Solomon) coding scheme.

The XOR coding scheme is characterized by a relatively small calculation amount, but an anti-packet loss capability is limited. For example, out-of-band FEC (such as ULPFEC, or FLEXFEC) of WebRTC uses the XOR coding scheme. In WebRTC, for the out-of-band FEC (whether ULPFEC or FLEXFEC), a mapping relationship between an FEC packet and a protected real-time transport protocol (real-time transport protocol, RTP) packet is determined based on a mask (mask). The out-of-band FEC defines two types of masks: random mask (RandMask) and burst mask (BurstMask). RandMask has better protection effect in random packet loss; and BurstMask provides better protection effect for continuous packet loss caused by bursts.

The Reed Solomon coding scheme may be used to implement a function of an error correction code by using a characteristic of a Vandermonde matrix or a Cauchy matrix. For a group of data packets including M original data packets and N repair data packets, in a case that a quantity of lost data packets is less than or equal to N, Reed Solomon coding may be used to recover the lost data packets.

In some embodiments, some applications may further support a dynamic FEC function; in other words, a transmit end may dynamically adjust a quantity of generated repair data packets according to a packet loss rate.

As described above, to optimize resource configuration, some communications systems introduce integrated handling of a data set. For example, a communications system may introduce parameters such as PSIHI and PSCR to implement integrated handling of a data set. However, these parameters may not be applicable to integrated handling of a data set. The following uses a parameter PSCR as an example for description.

For example, as mentioned above, the parameter PSCR may be applied to a scenario in which FEC is used at an application layer. However, when the parameter PSCR is applied to the scenario in which the FEC is used at the application layer, the parameter PSCR may not be applicable.

In an example of FEC based on the Reed Solomon coding scheme, although the PSCR may be applicable to the FEC based on the Reed Solomon coding scheme, introducing of the PSCR only cannot assist a data packet transmission node (for example, an access network device) in determining a quantity of packets that may be tolerated to be lost by the receive end. This is because, for some data packet transmission nodes (for example, an access network device), a quantity of data packets included in a data set is unknown, and generally, different data sets have different data volumes (size or data size).

In an example of FEC based on the XOR coding scheme, a tolerance of a receive end to packet loss in a data set depends on a mapping relationship between an original data packet and a repair data packet. In other words, only when both an original data packet and a repair data packet corresponding to the original data packet are lost, the original data packet cannot be recovered at the receive end. For example, a data set includes data packets A, B, C, A+B, and A+B+C, where A, B, and C are original data packets, A+B is a repair data packet corresponding to A and B, and A+B+C is a repair data packet corresponding to A, B, and C. In this case, when both C and A+B+C are lost, the receive end cannot obtain C. However, when C and A+B are lost, the receive end can still recover C. In other words, different data packets in a data set have different importance level, and a data packet transmission node (for example, an access network device) cannot determine, based only on the PSCR, whether the receive end can tolerate loss of a particular data packet.

In addition, for adaptive FEC (adaptive FEC, A-FEC) or dynamic FEC, the transmit end may adjust a quantity of repair data packets in real time according to a packet loss rate. In this case, introducing of only PSCR as a QoS parameter is not applicable either.

In other words, data set based QoS parameters (such as PSIHI and PSCR) introduced in the related technology may not be applicable. Therefore, how to perform integrated handling on a data set is an urgent problem to be solved.

For the foregoing problem, this application provides two embodiments. Embodiment 1 is intended to provide a parameter applicable at the data set level, so as to perform integrated handling on a data set. Embodiment 2 is intended to solve how to adjust a repair data packet in real time based on packet loss information, so as to optimize resource configuration.

It should be noted that Embodiment 1 and Embodiment 2 may be used separately or in combination, which is not limited in embodiments of this application. For example, a first communications device may acquire first information according to Embodiment 1, and handle a first data set (that is, Embodiment 1 is used by itself). Alternatively, a first communications device may transmit packet loss information for a first data set to a fourth communications device without acquiring first information (that is, Embodiment 2 is used by itself). Alternatively, when acquiring first information, a first communications device may transmit packet loss information for a first data set to a fourth communications device (that is, Embodiment 1 and Embodiment 2 are used in combination).

The following describes Embodiment 1 and Embodiment 2.

### Embodiment 1

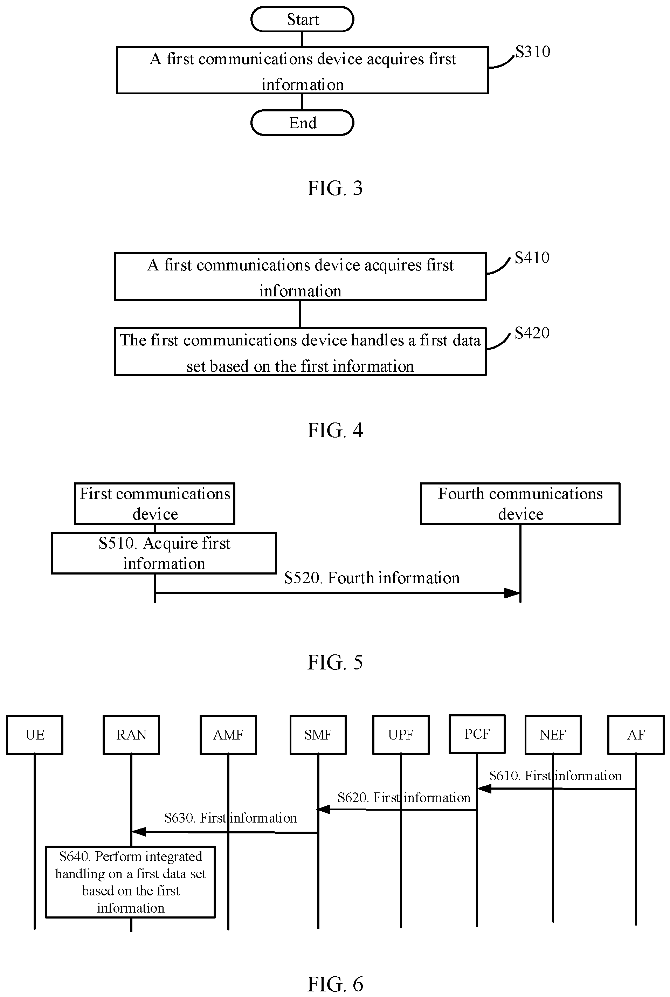

FIG. 3 is a schematic flowchart of a method for wireless communication according to Embodiment 1. The method illustrated in FIG. 3 may be executed by a first communications device. For ease of understanding, the following first describes the first communications device.

In embodiments of this application, the first communications device may be a node, a device, or a network element on a transmission path of a data set (for example, the first data set mentioned later). The first communications device is not specifically limited in embodiments of this application, provided that the first communications device is a node, a device, or a network element on a transmission path of a data set. The following exemplarily describes several possible implementations of the first communications device.

In some embodiments, the first communications device may be an access network device (such as a base station).

In some embodiments, the first communications device may be a user plane network element in a core network. For example, in an NR system, the first communications device may be a UPF. Embodiments of this application are not limited thereto. The first communications device may alternatively be another user plane network element. For example, the first communications device may alternatively be a user plane network element in a core network in a future communications system.

In some embodiments, the first communications device may be a terminal device.

In some embodiments, the first communications device may be a node, device, or network element on the transmission path of the data set, except for the transmit end. In an example of uplink transmission, the transmission path of the data set is a terminal device → an access network device → a user plane network element (such as a UPF) in a core network, and thus the first communications device may be a node, device, or network element other than the terminal device. For example, the first communications device may be the access network device or the UPF. In an example of downlink transmission, the transmission path of the data set is a user plane network element (such as a UPF) in a core network → an access network device → a terminal device, and thus the first communications device may be a node, device, or network element other than the user plane network element in the core network For example, the first communications device may be the access network device or the terminal device.

In addition to the foregoing listed possible implementations of the first communications device, the first communications device may be another node, device, or network element that is located on the transmission path of the data set, which is not limited in embodiments of this application. For example, a future communications system may introduce other nodes, devices, or network elements on a transmission path of a data set, and these nodes, devices, or network elements may also be used as the first communications device in this application.

The following describes the method illustrated in FIG. 3. The method illustrated in FIG. 3 may include step S310.

In step S310, a first communications device acquires first information.

The first information may be used for indicating an association relationship (or referred to as a correspondence, a dependency relationship, or the like) between data packets in a first data set.

The first data set is not limited in embodiments of this application. The first data set may be any data set, or the first data set may be any data set that includes a plurality of data packets. In an example of an NR system, the first data set may be, for example, a PDU set. Embodiments of this application are not limited thereto. The first data set may alternatively be another data set that includes a plurality of data packets. For example, the first data set may be a data set formed by a plurality of data packets corresponding to a video frame, or may be a data set formed by a plurality of data packets corresponding to a piece of burst data, or may be a data set formed by a plurality of data packets corresponding to a slice.

In some embodiments, the first information being used for indicating the association relationship between the data packets in the first data set may mean that the first information may be used for indicating an association relationship between an original data packet and a repair data packet in the first data set. The association relationship between the data packets in the first data set is not limited in embodiments of this application. In an example, the first information may be used for indicating a quantity relationship between an original data packet and a repair data packet in the first data set, for example, how many original data packets and how many repair data packets are included in the first data set. In another example, the first information may be used for indicating a mapping relationship between original and repair data packets in the first data set, for example, which repair data packet(s) may be used to decode a corresponding original data packet. In still another example, the first information may be used for indicating an arrangement relationship or the like between an original data packet and a repair data packet in the first data set, for example, in the first data set, which data packets are original data packets and which data packets are repair data packets.

For other content of the first information, reference may be made to the following description. For brevity, details are not described herein.

In embodiments of this application, there may be a plurality of manners in which the first communications device acquires the first information. For example, the first information may be acquired in one or more of the following manners: the first information being transmitted to the first communications device from a second communications device; the first information being acquired by the first communications device based on local configuration information of the first communications device; the first information being acquired by the first communications device by querying subscription information; the first information being acquired by the first communications device by reading a header of a data packet in the first data set, or the like.

In an example, the first information may be transmitted by the second communications device to the first communications device. The second communications device may be, for example, an AF, a terminal device, or a network element in a core network. In some embodiments, the second communications device may be an initiator or a requester of a service, for example, the second communications device may be the AF or the terminal device. In some embodiments, the second communications device may be an intermediate node, device, or network element through which an initiator of a service transmits the first information to the first communications device. For example, the second communications device may be the network element (such as a PCF, an SMF, and an AMF) in the core network. Certainly, the second communications device may alternatively be another network element in the core network other than the foregoing listed network elements. For example, the second communications device may be a network element in a core network in a future communications system.

In some embodiments, if the first information is transmitted by the second communications device to the first communications device, the step S310 may be replaced with: receiving, by the first communications device, the first information transmitted by the second communications device, or transmitting, by the second communications device, the first information to the first communications device.

In another example, the first information may be acquired by the first communications device based on the local configuration information.

In still another example, the first information may be acquired by the first communications device by querying the subscription information. For example, the first communications device may transmit a request to a UDM to request to query subscription information, where the subscription information may include part of or all information in the first information.

In still another example, the first information may be acquired by the first communications device by reading the header of the data packet in the first data set. For example, the first communications device may read a header of a general packet radio service tunnelling protocol-user plane (general packet radio service tunnelling protocol-user plane, GTP-U) data packet in the first data set to acquire the first information. Alternatively, the first communications device may read a header of an application layer data packet in the first data set to acquire the first information or the like.

In still another example, the first information may be acquired based on the local configuration information of the first communications device and information transmitted by the second communications device.

In still another example, the first information may be acquired based on the subscription information queried by the first communications device and information transmitted by the second communications device.

In some embodiments, the first information is acquired by using a control plane.

In some embodiments, if the first information is acquired by using the control plane, the first information may be acquired in one or more of the following manners: the first information being transmitted by the second communications device to the first communications device; the first information being acquired by the first communications device based on the local configuration information, or the first information being acquired by the first communications device by querying the subscription information.

For example, the first communications device is an access network device, and the second communications device is an AF. The second communications device may directly provide the first information to a PCF, and then the PCF transmits the first information to the first communications device through a network element such as an SMF or an AMF; or the second communications device may provide the first information to the PCF through an NEF, and then the PCF transmits the first information to the first communications device through a network element such as an SMF or an AMF.

For example, the first communications device is an access network device, and the second communications device is a terminal device. The second communications device may provide the first information to the first communications device by using air interface signalling.

In some embodiments, FEC coding of the first data set is static FEC coding or semi-static FEC coding. Alternatively, an FEC coding algorithm used for the first data set is a static FEC coding algorithm or a semi-static FEC coding algorithm.

In some embodiments, in a case that the FEC coding for the first data set is the static FEC coding or semi-static FEC coding, the first information may be acquired by using a control plane or transmitted by using a control plane.

An advantage of acquiring or transmitting the first information by using the control plane is as follows: a case of reading a header of a data packet in the first data set by the first communications device may be avoided, and there is no need to occupy a resource of the header of the data packet to carry the first information. In some embodiments, the manner of acquiring or transmitting the first information by using the control plane is applicable to a scenario in which the FEC coding is the static FEC coding or the semi-static FEC coding.

In some embodiments, the first information is acquired by using a user plane.

In some embodiments, if the first information is acquired by using the user plane, the first information may be acquired in one or more of the following manners: the first information being acquired by the first communications device based on local configuration information, or the first information being acquired by the first communications device by reading a header of a data packet in the first data set.

The following describes how to acquire the first information via the user plane by using downlink transmission and uplink transmission as examples, respectively. An implementation in which the first communications device acquires the first information via the user plane in a downlink transmission process is first described.

For example, when the first communications device is an access network device, and the second communications device is an AF, the second communications device may provide the first information to a UPF and/or the first communications device. In an implementation, the UPF may read the first information from a header of a data packet (such as an application layer data packet) in the first data set transmitted by the second communications device, and encapsulate the first information in a header of a GTP-U data packet, and then the first communications device acquires the first information by reading the header of the GTP-U data packet transmitted by the UPF. In another implementation, after receiving the first data set transmitted by the second communications device, the UPF may transparently transmit the first data set to the first communications device, and then the first communications device may acquire the first information by reading a header of a data packet (an application layer data packet) in the first data set transmitted by the UPF. In still another possible implementation, the first communications device and/or the UPF may read a header of a data packet in the first data set based on the local configuration information to acquire the first information.

The following describes an implementation in which the first communications device acquires the first information via the user plane in an uplink transmission process.

For example, the first communications device is an access network device, and the second communications device is a terminal device. In an implementation, the second communications device may add the first information to a header of a data packet in the first data set, and the first communications device may read the header of the data packet transmitted by the first communications device to acquire the first information.

In some embodiments, FEC coding of the first data set is dynamic FEC coding. Alternatively, an FEC coding algorithm used for the first data set is a dynamic FEC coding algorithm.

In some embodiments, in a case that the FEC coding of the first data set is the dynamic FEC coding, the first information may be acquired by using the user plane or transmitted by using the user plane.

An advantage of acquiring or transmitting the first information by using the user plane lies in facilitating dynamic adjustment of encoding efficiency and change in an encoding algorithm by an encoder (for example, an encoder at a transmit end). In some embodiments, the manner of acquiring or transmitting the first information by using the user plane is applicable to a scenario in which the FEC coding is the dynamic FEC coding.

In embodiments of this application, the first information is introduced, so that the first communications device may perform integrated handling on the first data set based on the first information to optimize resource configuration. Alternatively, in embodiments of this application, the first information is introduced, so that when performing integrated handling on the first data set, the first communications device may consider an association relationship between data packets in the first data set, thereby facilitating optimization of resource configuration.

The following describes the first information in more detail.

In some embodiments, the first information may include FEC-related information for the first data set. In this case, it may be understood that the FEC-related information for the first data set may be used for indicating an association relationship between data packets in the first data set. In embodiments of this application, the FEC-related information for the first data set may be used for indicating an association relationship between data packets in the first data set, so that integrated handling is performed on the first data set based on the FEC-related information, which helps improve resource utilization and reduce a probability of network congestion.

Embodiments of this application are not limited thereto. In a case that another error correction technology is used at an application layer, the first information may include information about another error correction technology for the first data set, which is used for indicating an association relationship between data packets in the first data set. For example, the first information may include information related to another error correction technology such as retransmission error detection (retransmission error detection, RED).

In some embodiments, the first information may be associated with one or more of the following: FEC type information of the first data set; information about allowable packet loss for the first data set; or information about a data packet in the first data set.

The FEC type information of the first data set may be used for indicating an FEC type of the first data set. Alternatively, the FEC type information of the first data set may be used for indicating a type (protocol type) of FEC used for the first data set. The FEC type of the first data set is not limited in embodiments of this application. In some embodiments, the FEC type of the first data set may include in-band FEC and out-of-band FEC, and the FEC type information of the first data set may be used for indicating whether the FEC type of the first data set is the in-band FEC or the out-of-band FEC. In some embodiments, classification of the FEC type of the first data set may be further refined. For example, the FEC type of the first data set may include ULPFEC, FLEXFEC, OPUS in-band FEC, and the like. The FEC type of the first data set may be used for indicating whether the FEC type of the first data set is the ULPFEC or FLEXFEC, or OPUS in-band FEC.

An implementation of indicating the FEC type information of the first data set is not limited in embodiments of this application. For example, the FEC type information of the first data set may be indicated by using an FEC coding ID. Alternatively, the FEC type information of the first data set may be indicated by using an FEC type identifier negotiated by another core network and an application server, or the like.

In some embodiments, the FEC type information of the first data set may be used for indicating an FEC coding type used for the first data set. For example, the FEC type information of the first data set may be used for indicating whether an XOR coding scheme or an Reed Solomon coding scheme is used in the first data set. Alternatively, the FEC type information of the first data set may be used for indicating whether the first data set uses a static FEC coding scheme, a semi-static FEC coding scheme, a dynamic FEC coding scheme, or the like.

In some embodiments, the FEC type information of the first data set may also be understood as FEC type information of a target service flow corresponding to the first data set. For example, the FEC type information of the first data set may be used for indicating a protocol type or a coding type or the like of FEC used for the target service flow corresponding to the first data set.

The FEC type information of the first data set belongs to a type of the FEC-related information for the first data set. In addition to the FEC type information, the FEC-related information for the first data set may further include other FEC information, such as information about allowable packet loss for the first data set, or information about a data packet in the first data set.

The information about allowable packet loss for the first data set may be used for indicating a tolerance of the first data set to packet loss. For example, the information about allowable packet loss for the first data set may be used for indicating an allowable quantity of lost packets for the first data set, an allowable packet loss size for the first data set, or the like.

There may be a plurality of types of information about data packets in the first data set, which is not limited in embodiments of this application. For example, the information about the data packets in the first data set may include information about a quantity of data packets in the first data set, information about a total size of data packets in the first data set, information about importance of data packets in the first data set, information about data packet composition of the first data set (for example, information about an original data packet and a repair data packet), or the like.

For example, the first information may include one or more of the following: FEC type information of the first data set; an allowable quantity of lost packets for the first data set; an allowable packet loss size for the first data set; a quantity of data packets required to be successfully transmitted to a receive end in the first data set; a size of data packets required to be successfully transmitted to a receive end in the first data set; a ratio of an allowable quantity of lost packets for the first data set to a total quantity of data packets in the first data set; a ratio of an allowable packet loss size for the first data set to a total size of all data packets in the first data set; a ratio of a quantity of data packets required to be successfully transmitted to a receive end in the first data set to a total quantity of data packets in the first data set; a ratio of a size of data packets required to be successfully transmitted to a receive end in the first data set to a total size of all data packets in the first data set; a quantity of data packets in the first data set; a size of data packets in the first data set; type information of data packets in the first data set; sequence numbers of data packets in the first data set; information indicating importance of data packets in the first data set; information indicating a mapping relationship between original and repair data packets in the first data set; boundary information between original and repair data packets in the first data set; or the like.

It should be noted that the quantity of data packets mentioned in embodiments of this application means how many data packets there are. For example, the allowable quantity of lost packets for the first data set may mean how many data packets are allowed to be lost in the first data set during transmission. Alternatively, the quantity of data packets in the first data set may mean how many data packets are included in the first data set. The size of data packets mentioned in embodiments of this application means an amount or a volume of the data packets. For example, the allowable packet loss size for the first data set means a size of data packets allowed to be lost in the first data set during transmission, for example, how many bytes (bit/byte) of data packets are allowed to be lost. Alternatively, the size of data packets in the first data set may mean a size of data packets included in the first data set, for example, how many bytes of data packets are included.

In some embodiments, the allowable quantity of lost packets for the first data set or the allowable packet loss size for the first data set may mean a maximum (the largest) quantity of packets allowed to be lost or a maximum (the largest) size of data packets allowed to be lost in the first data set. For example, assuming that the allowable quantity of lost packets for the first data set is 5, and after receiving the first data set, if the receive end finds that the quantity of lost packets in the first data set is less than or equal to 5, the first data set may be considered available. Alternatively, assuming that the allowable packet loss size for the first data set is 100 bytes, and after receiving the first data set, if the receive end finds that the size of lost data packets in the first data set is less than or equal to 100 bytes, the first data set may be considered available.

In some embodiments, the quantity of data packets or the size of data packets required to be successfully transmitted to the receive end in the first data set may mean a minimum quantity of data packets or a minimum size of data packets required to be successfully transmitted to the receive end in the first data set. For example, assuming that the quantity of data packets required to be successfully transmitted to the receive end in the first data set is 10, and after receiving the first data set, if the receive end finds that the quantity of data packets in the first data set is greater than or equal to 10, the first data set may be considered available. Alternatively, assuming that the size of data packets required to be successfully transmitted to the receive end in the first data set is 1000 bytes, and after receiving the first data set, if the receive end finds that the size of the data packets from the first data set is greater than or equal to 1000 bytes, the first data set may be considered available.

The type information of data packets in the first data set may be used for indicating a type of data packets in the first data set. For example, the type information of data packets in the first data set may be used for indicating one or more of the following: whether an original data packet and a repair data packet are included in the first data set; how many original data packets and how many repair data packets are included in the first data set; which data packets in the first data set are original data packets, and which data packets in the first data set are repair data packets; or the like.

The sequence number of the data packet in the first data set may be used to uniquely identify respective data packets in the first data set. For example, the first data set includes five data packets, and sequence numbers of the five data packets are respectively 0, 1, 2, 3, 4, and 5. In this case, each sequence number in the sequence numbers may uniquely identify one data packet in the first data set.

In some embodiments, different data packets in the first data set have different importance levels. Therefore, in embodiments of this application, the information indicating importance of data packets in the first data set is introduced into the first information, to indicate an importance level of each data packet in the first data set. For example, the first data set includes data packets A, B, C, A+B, and A+B+C, where A, B, and C are original data packets, A+B is a repair data packet corresponding to A and B, and A+B+C is a repair data packet corresponding to A, B, and C. In this case, when both C and A+B+C are lost, the receive end cannot obtain C. However, when C and A+B are lost, the receive end can still recover C. In other words, an importance level of the repair data packet A+B+C is higher than an importance level of the repair data packet A+B. In an implementation, in embodiments of this application, the first information may indicate that an importance level of the repair data packet A+B+C is higher than an importance level of the repair data packet A+B.

In some embodiments, the information indicating the mapping relationship between original and repair data packets in the first data set may be used for indicating which repair data packet(s) may be used to repair (or recover or protect, or the like) which original data packet(s). Alternatively, the information indicating the mapping relationship between original and repair data packets in the first data set may be used for indicating a protection relationship between original and repair data packets. For example, the first data set includes data packets A, B, C, A+B, and A+B+C, where A, B, and C are original data packets, A+B is a repair data packet corresponding to A and B, and A+B+C is a repair data packet corresponding to A, B, and C. In this case, the information indicating the mapping relationship between original and repair data packets in the first data set may be used for indicating that there is a mapping relationship between A+B and A and there is a mapping relationship between A+B and B, that is, A+B may be used to repair each of A or B; and/or the information indicating the mapping relationship between original and repair data packets in the first data set may be used for indicating that there is a mapping relationship between A+B+C and A, there is a mapping relationship between A+B+C and B, and there is a mapping relationship between A+B+C and C, that is, A+B+C may be used to repair any of A, B, or C.

In some embodiments, the boundary information between original and repair data packets in the first data set may be used for indicating arrangement information of data packets in the first data set, or arrangement information of data packets in the first data set may be determined based on the boundary information between original and repair data packets in the first data set. In some embodiments, the boundary information between original and repair data packets in the first data set may be used for indicating a boundary between the original data packet and the repair data packet in the first data set (for example, specifying the start of the original data packets, and specifying the start of the repair data packets, or the like), to indicate arrangement information of data packets in the first data set by indicating the boundary between the original and the repair data packets.

There may be a plurality of indication manners of the boundary information, which is not limited in this application. The following describes the indication manners of the boundary information.

In a possible implementation, the boundary information may be indicated by using a sequence number of a data packet in the first data set. In an example, the boundary information may include a sequence number X, which indicates that a data packet starting from the sequence number X is a repair data packet, or indicates that a data packet starting from the sequence number X is an original data packet, or the like. Certainly, when the boundary information includes the sequence number X, the sequence number X may alternatively indicate that a data packet (for example, a data packet whose sequence number is X+1) following the data packet with the sequence number X is a repair data packet, or indicate that a data packet following the data packet with the sequence number X is an original data packet, or the like. In another example, the boundary information may include sequence numbers X and Y, which indicate that one or more data packets between the sequence numbers X and Y are repair data packets, or indicate that one or more data packets between the sequence numbers X and Y are original data packets, or the like.

In another possible implementation, the boundary information may be indicated by using a quantity of data packets in the first data set. In an example, the boundary information may include a quantity A, which indicates that the first A data packets in the first data set are original data packets, or the first A data packets are repair data packets, or the like. Certainly, when the boundary information includes the quantity A, the quantity A may alternatively indicate that the first A-1 data packets in the first data set are original data packets, or the first A-1 data packets in the first data set are repair data packets, or the last A data packets in the first data set are repair data packets, or the last A data packets in the first data set are original data packets, or the last A-1 data packets in the first data set are repair data packets, or the last A-1 data packets in the first data set are original data packets, or the like. In another example, the boundary information may include a quantity A and a quantity B, which indicate that one or more data packets between the quantity A and the quantity B (that is, between the A^{th} data packet and the B^{th} data packet) are repair data packets, or indicate that one or more data packets between the quantity A and the quantity B are original data packets, or the like.

In some embodiments, the boundary information may include one or more sequence numbers or include one or more numerical quantities, and the one or more sequence numbers or the one or more numerical quantities may be used to indicate the boundary between an original data packet and a repair data packet in the first data set. For example, an arrangement manner of data packets in the first data set is that all original data packets are followed by all repair data packets. In this case, a sequence number or a numerical quantity may be used for indicating the boundary between an original data packet and a repair data packet in the first data set. Alternatively, an arrangement manner of data packets in the first data set is that original data packets and repair data packets are arranged in an out-of-order manner. In this case, a plurality of sequence numbers or a plurality of numerical quantities may be used for indicating the boundary between an original data packet and a repair data packet in the first data set.

In some embodiments, the boundary information being used for indicating the boundary between an original data packet and a repair data packet may alternatively be understood as the boundary information being used for indicating a boundary between valid data (necessary data) and redundant data, or indicating a boundary between a valid data packet (necessary data packet) and a redundant data packet. In embodiments of this application, the valid data (valid data packet) or necessary data (necessary data packet) may be used to successfully decode a data packet received by the receive end (for example, the receive end may successfully decode the received data packet only by using the valid data packet or the necessary data packet), or in embodiments of this application, a data packet received by the receive end may be successfully decoded by using the valid data or the necessary data in the first data set. A type of valid data packets or necessary data packets in the first data set is not limited in embodiments of this application, provided that these data packets can be used by the receive end to successfully decode a received data packet. For example, in some embodiments, the valid data packet or the necessary data packet in the first data set may include an original data packet in the first data set. In some embodiments, the valid data packet or the necessary data packet in the first data set may include an original data packet, part of repair data packets, and the like in the first data set.

In some embodiments, when the boundary information is used for indicating a boundary between a valid data packet (a necessary data packet) and a redundant data packet, the boundary information may be further used by a device (for example, the first communications device) that receives the first information to determine which data packets can be used to successfully decode the first data set and/or which data packets in the first data set can be successfully recovered even if they are lost, and/or the like. For example, the boundary information may indicate, by using a sequence number X or X+1, that after the first X data packets in the first data set are received, a subsequent data packet may be recovered by the receive end based on the first X data packets even if the subsequent data packet is lost.

As mentioned above, the first information may be transmitted by the second communications device to the first communications device. The following describes in detail how the second communications device transmits the first information to the first communications device.

### Implementation 1: The second communications device transmits the first information to the first communications device by using a first message.

In an implementation, the second communications device may transmit the first message to the first communications device, and the first message may include the first information.

In some embodiments, the second communications device may transmit the first message to the first communications device by using a control plane. In this case, it may be understood that the first message is a control plane message. In other words, the second communications device may transmit the first information to the first communications device by using the control plane.

In some embodiments, the first message may be used to request to handle the first data set, for example, request the first communications device to handle the first data set. Therefore, in some embodiments, the first message may also be referred to as a data set handling request message, a data set integrated handling request message, or the like.

It should be noted that, the handling of the first data set mentioned in embodiments of this application may be understood as performing integrated handling on the first data set, or performing data set based handling on the first data set, or performing handling on the first data set by using a data set as a granularity, or the like. The handling of the first data set mentioned below has the same meaning. For brevity, details are not described below.

A manner of carrying the first message is not limited in embodiments of this application. In an example of the second communications device being an AF, the second communications device may make the first message carried by setting up a procedure such as an AF session with required QoS procedure (setting up an AF session with required QoS procedure) or an AF session with required QoS update procedure (AF session with required QoS update procedure), and transmit the first message to the first communications device (such as a PCF or an access network device). In an example of the second communications device being a terminal device, the second communications device may use air interface signaling to carry the first message, and transmit the first message to the first communications device (such as an access network device), or the like.

In some embodiments, the first information may be used to enable (or instruct, allow, or the like; and the term "enable" mentioned below may be replaced with "instruct" or "allow") the first communications device to handle the first data set. In other words, as long as the second communications device transmits the first information to the first communications device, it may be considered that the first communications device needs to handle the first data set. For example, when the second communications device transmits the first information to the first communications device by using the first message, it may be considered that the first communications device needs to handle the first data set as long as the first communications device receives the first message.

In some embodiments, the second communications device may use separate indication information to enable the first communications device to handle the first data set. In a possible implementation, the second communications device may transmit second information to the first communications device, where the second information is used to enable the first communications device to handle the first data set.

In some embodiments, the first information and the second information may be transmitted to the first communications device together. For example, the first message may include both the first information and the second information, and the second communications device may transmit the first information and the second information to the first communications device by using the first message.

In some embodiments, the first information and the second information may be transmitted separately (independently) to the first communications device. For example, the first message may include the first information but does not include the second information. The second communications device may transmit the first information to the first communications device by using the first message, and transmit the second information to the first communications device by using another message.

In some embodiments, the first message may include third information, and the third information may be used for indicating time window information for handling the first data set. Alternatively, the third information is associated with a time window for handling the first data set.

In some embodiments, the third information may be used to assist the first communications device in performing integrated handling on the first data set. For example, when the first communications device does not receive a specific data packet in the time window indicated by the third information, it may be considered that the data packet is lost or the data packet is an incorrect data packet.

The time window indicated by the third information is not limited in embodiments of this application. In some embodiments, the time window indicated by the third information may be a data set delay budget corresponding to the first data set, or a length of the time window indicated by the third information may be equal to a data set delay budget corresponding to the first data set. In an example in which the first data set being a PDU set, the time window indicated by the third information may be a PDU set delay budget (PDU set delay budget, PSDB). In some embodiments, the time window indicated by the third information may be a packet delay budget (packet delay budget, PDB) corresponding to the first data set, or a length of the time window indicated with the third information may be equal to a packet delay budget corresponding to the first data set. In an example in which the first data set being a PDU set, the time window indicated by the third information may be a packet delay budget corresponding to the PDU set.

Certainly, embodiments of this application are not limited to the case where the time window indicated by the third information is the data set delay budget or packet delay budget. For example, the time window indicated by the third information may be a time window specified by the second communications device, or a time window determined by the first communications device based on local configuration information, or the like.

The packet delay budget corresponding to the first data set is not limited in embodiments of this application. For example, the packet delay budget corresponding to the first data set may be an average packet delay budget corresponding to the first data set. Alternatively, the packet delay budget corresponding to the first data set may be a maximum packet delay budget corresponding to the first data set. Alternatively, the packet delay budget corresponding to the first data set may be a minimum packet delay budget corresponding to the first data set. Alternatively, the packet delay budget corresponding to the first data set may be a packet delay budget for any data packet in the first data set, or the like.

In some embodiments, if the first information is acquired by the first communications device by querying subscription information, the second communications device (for example, a UDM) may still transmit the first information to the first communications device by using the control plane.

### Implementation 2: The second communications device transmits the first information to the first communications device by using a data packet.

In an implementation, the second communications device may add the first information to a header of a data packet in the first data set, and transmit the first information to the first communications device by using a user plane.

In some embodiments, the second communications device transmitting the first information to the first communications device by using the header of the data packet may be understood as that the second communications device may transmit the first information to the first communications device by using the user plane. Alternatively, the second communications device may allow the first information to be carried in the header of the data packet, and transmit the data packet to the first communications device by using the user plane, so that the first communications device acquires the first information from the header of the data packet.

For example, the second communications device is an application server (application server, AS) or a DN, and the first communications device is a UPF. In an example, the second communications device may add the first information to a header of an application layer data packet in the first data set, and transmit the application layer data packet in the first data set to the first communications device. Then, the first communications device may read the header of the application layer data packet in the first data set to acquire the first information.

For example, the second communications device is an AS or a DN, and the first communications device is an access network device. In an example, the second communications device may add the first information to a header of an application layer data packet in the first data set, and transmit the application layer data packet to a UPF. After acquiring the first information by reading the header of the application layer data packet in the first data set, the UPF may add the first information to a header of a GTP-U data packet in the first data set, and transmit the GTP-U data packet in the first data set to the first communications device. After receiving the GTP-U data packet in the first data set, the first communications device may read the header of the GTP-U data packet in the first data set to acquire the first information. In another example, the second communications device may add the first information to a header of an application layer data packet in the first data set, and transmit the application layer data packet to a UPF. The UPF may directly forward (transparently transmit) the application layer data packet in the first data set to the first communications device. After receiving the application layer data packet in the first data set, the first communications device may read the header of the application layer data packet in the first data set to acquire the first information.

For example, the second communications device is a terminal device, and the first communications device is an access network device. In an example, the second communications device may add the first information to a header of an application layer data packet in the first data set, and transmit the application layer data packet in the first data set to the first communications device. Then, the first communications device may read the header of the application layer data packet in the first data set to acquire the first information.

For example, the second communications device is a terminal device, and the first communications device is a UPF. In an example, the second communications device may add the first information to a header of an application layer data packet in the first data set, and transmit the application layer data packet to an access network device. After acquiring the first information by reading the header of the application layer data packet in the first data set, the access network device may add the first information to a header of a GTP-U data packet in the first data set, and transmit the GTP-U data packet in the first data set to the first communications device. After receiving the GTP-U data packet in the first data set, the first communications device may read the header of the GTP-U data packet in the first data set to acquire the first information. In another example, the second communications device may add the first information to a header of an application layer data packet in the first data set, and transmit the application layer data packet to an access network device. The access network device may directly forward (transparently transmit) the application layer data packet in the first data set to the first communications device. After receiving the application layer data packet in the first data set, the first communications device may read the header of the application layer data packet in the first data set to acquire the first information.

In some embodiments, after acquiring the first information, the first communications device needs to transmit the first information to a next node (that is, a next node of the first communications device on a transmission path of the first data set), so that the next node handles the first data set based on the first information. Taking the first communications device as an access network device as an example, after acquiring the first information, the first communications device may need to transmit the first information to a UPF (a next node on an uplink transmission path), or may need to transmit the first information to a terminal device (a next node on a downlink transmission path). The following describes an implementation scheme in which the first communications device transmits the first information to a next node.

In a possible implementation, after acquiring the first information, the first communications device may perform the following steps: adding the first information to a header of a data packet in the first data set, and transmitting, to a third communications device, the data packet to which the first information is added. The third communications device is a next node of the first communications device on a transmission path of the first data set.

In some embodiments, the first communications device adding the first information to the header of the data packet in the first data set may mean that the first communications device adds the first information to a header of a GTP-U data packet in the first data set. Then, the first communications device may transmit the GTP-U data packet in the first data set to the third communications device.

The first information added by the first communications device to the header of the data packet in the first data set is not limited in embodiments of this application, and the first information may be any one or more of items included in the first information mentioned above. For example, the first information added by the first communications device to the header of the data packet of the first data set may include one or more of the following: information indicating importance of data packets in the first data set; a size of data packets in the first data set; sequence numbers of data packets in the first data set; a size or a length of the first data set (or a quantity of data packets in the first data set); information indicating a mapping relationship between original and repair data packets in the first data set (for example, a sequence number of a repair data packet corresponding to an original data packet, or a sequence number of an original data packet protected by a repair data packet); a ratio of a quantity of original data packets in the first data set to a total quantity of data packets in the first data set; a ratio of a size of data packets required to be successfully transmitted to a receive end in the first data set to a total size of all data packets in the first data set; a quantity of original data packets in the first data set; a quantity of repair data packets in the first data set, or the like.

In some embodiments, in addition to transmitting the first information to the first communications device, the second communications device may further transmit, to the first communications device, one or more of the following: first indication information or second indication information. For example, in a case that the second communications device transmits the first information to the first communications device by using a user plane, the second communications device may transmit the first indication information and/or the second indication information to the first communications device. The following describes the first indication information and the second indication information.

The first indication information may be used for instructing to handle the first data set. For example, the first indication information may be used for instructing the first communications device to handle the first data set. Alternatively, the first indication information may be used for instructing a next node of the first communications device to handle the first data set.

In some embodiments, the first indication information may be transmitted by using a control plane. For example, the second communications device is an AF, and the first communications device is an access network device or a UPF. The second communications device may transmit the first indication information to a PCF directly or by using an NEF, and then the PCF transmits the first indication information to an SMF, so that the SMF transmits the first indication information to the first communications device. In an implementation, if the first communications device is the UPF, the SMF may directly transmit the first indication information to the UPF, to enable the UPF to handle the first data set. In another implementation, if the first communications device is the access network device, the SMF may transmit the first indication information to the access network device by using an AMF, to enable the access network device to handle the first data set.

In some embodiments, the first indication information may be transmitted by using air interface signalling. For example, the second communications device is a terminal device, and the first communications device is an access network device. The second communications device may directly transmit the first indication information to the first communications device by using the air interface signalling.

In some embodiments, the first indication information may be transmitted by using air interface signalling and a control plane. For example, the second communications device is a terminal device, and the first communications device is a UPF. The second communications device may transmit the first indication information to an access network device by using the air interface signalling, and then the access network device transmits the first indication information to the first communications device by using the control plane.

The second indication information may be used for determining a target service flow corresponding to the first data set. Alternatively, the second indication information may be used for indicating information about a target service flow corresponding to the first data set. For example, the second indication information may be used for indicating flow descriptive information for the target service flow, to assist the first communications device in determining the target service flow corresponding to the first data set.

Information included in the second indication information is not specifically limited in embodiments of this application. In an example in which the second indication information is used for indicating the flow descriptive information for the target service flow, the second indication information may include one or more of the following: a source address, a destination address, a source port number, a destination port number, a protocol type of the target service flow, a flow direction, or the like. Embodiments of this application are not limited thereto. The second indication information may be used for indicating any information about the target service flow. For example, the second indication information may be used for indicating one or more of the following: a QoS flow identifier (QoS flow identifier, QFI), a PDU session ID, a data network name (data network name, DNN), single network slice selection assistance information (single network slice selection assistance information, S-NSSAI), an IP 5-tuple, a flow direction, or the like.

In some embodiments, after acquiring the first information, the first communications device may handle the first data set based on the first information, which is described below with reference to FIG. 4.

FIG. 4 is a schematic flowchart of another method for wireless communication according to Embodiment 1 of this application. The method illustrated in FIG. 4 may include step S410 and step S420.

In step S410, a first communications device acquires first information. The first information may be used for indicating an association relationship between data packets in a first data set.

For detailed descriptions of step S410, reference may be made to the related descriptions of step S310. For brevity, details are not described herein again.

In step S420, the first communications device handles the first data set based on the first information.

In some embodiments, the handling of the first data set by the first communications device based on the first information may include that the first communications device may handle the first data set based on the first information and a reception status of a data packet in the first data set.

In some embodiments, the handling of the first data set by the first communications device based on the first information may include that the first communications device may perform corresponding resource scheduling based on the first information and a reception status of a data packet in the first data set.

In some embodiments, the handling of the first data set by the first communications device based on the first information may include that the first communications device may handle the first data set based on the first information and other information. For example, the first communications device may handle the first data set based on one or more of the first information, second information, or third information. Alternatively, the first communications device may handle the first data set based on one or more of the first information, second information, third information, or a reception status of a data packet in the first data set, or the like. Alternatively, the first communications device may handle the first data set based on one or more of the first information, first indication information, or second indication information, or the like. Alternatively, the first communications device may handle the first data set based on one or more of the first information, first indication information, second indication information, or a reception status of a data packet in the first data set, or the like.

The following describes how the first communications device handles the first data set based on the first information.

In some embodiments, the handling of the first data set by the first communications device based on the first information may include that: in a case that a quantity of valid data packets from the first data set is not sufficient to support successful decoding of the first data set, the first communications device may discard the first data set. In other words, when a quantity of valid data packets or a size of valid data received by the first communications device is less than or equal to a threshold such that the first data set cannot be successfully decoded, the first communications device may discard the first data set, or the first communications device may discard the first data set received by the first communications device (for example, discard other data packets in the first data set, or discard the received data packets in the first data set). In other words, when lost packets or error packets received by the first communications device are greater than or equal to a threshold such that the first data set cannot be successfully decoded, the first communications device may discard and no longer transmit the first data set to a next node.

The first information may be taken into consideration by the first communications device during the transmission of the first data set, so that it is possible to make more extensive use of the successfully received data packets to determine how to handle the first data set. In this way, according to embodiments of this application, a problem that some data packets, even if being delivered to the receive end, in the first data set cannot be successfully decoded because certain data packet(s) in the first data set are lost is avoided. Alternatively, when determining that the received data packets from the first data set cannot be successfully decoded, the first communications device may discard the first data set, so that resources can be saved for transmission of other data, thereby improving user experience.

In an example, the discarding of the first data set by the first communications device in a case that the quantity of valid data packets from the first data set is not sufficient to support successful decoding of the first data set, may include that: in a case that the first information acquired by the first communications device includes an allowable quantity X of lost packets for the first data set and/or a quantity Y of data packets required to be successfully transmitted to the receive end in the first data set, the first communications device may discard the first data set (for example, discard other data packets in the first data set) or be unnecessary to transmit the received first data set to a next node in one or more of the following cases: if it is found that a quantity of lost packets in the first data set is greater than or equal to X; if it is found that a quantity of lost packets in the first data set is greater than or equal to Z (Z is equal to a total quantity of data packets in the first data set minus Y); if it is found that a quantity of received data packets in the first data set is less than Y; if it is found that a quantity of received data packets in the first data set is less than K (K is equal to a total quantity of data packets in the first data set minus X); if Y data packets are not received in a given time window (for example, the time window indicated by the third information); if K data packets are not received in a given time window; or the like.

In another example, the discarding of the first data set by the first communications device in a case that the quantity of valid data packets from the first data set is not sufficient to support successful decoding of the first data set may include that: in a case that the first information acquired by the first communications device includes an allowable packet loss size X for the first data set and/or a size Y of data packets required to be successfully transmitted to the receive end in the first data set, the first communications device may discard the first data set (for example, discard other data packets in the first data set) or be unnecessary to transmit the received first data set to a next node in one or more of the following cases: if it is found that a size of lost data packets from the first data set is greater than or equal to X; if it is found that a size of lost data packets from the first data set is greater than or equal to Z (Z is equal to a size of all data packets in the first data set minus Y); if it is found that a size of received data packets from the first data set is less than Y; if it is found that a size of received data packets from the first data set is less than K (K is equal to a size of all data packets in the first data set minus X); if a size of data packets received in a given time window (for example, the time window indicated by the third information) is less than Y; if a size of data packets received in a given time window is less than K; or the like.

In still another example, the discarding of the first data set by the first communications device in a case that the quantity of valid data packets from the first data set is not sufficient to support successful decoding of the first data set may include that: in a case that the first information acquired by the first communications device includes information such as information indicating a mapping relationship between original and repair data packets in the first data set, a sequence number of an original data packet, and a sequence number of a repair data packet, then the first communications device may discard the first data set (for example, discard other data packets in the first data set) or be unnecessary to transmit the received first data set to a next node after determining that certain original data packet(s) and the corresponding repair data packet(s) are lost (for example, they are not received in a given time window).

In still another example, the discarding of the first data set by the first communications device in a case that the quantity of valid data packets from the first data set is not sufficient to support successful decoding of the first data set may include that: in a case that the first information acquired by the first communications device includes boundary information between original and repair data packets in the first data set, the first communications device may determine, based on the boundary information, whether to discard the first data set, or whether to transmit the received first data set to a next node. In an example in which the first information indicates that a data packet whose sequence number is X is used as a boundary or indicates that a data packet whose sequence number is X and a data packet whose sequence number is Y are used as boundaries, the first communications device may discard the first data set (for example, discard other data packets in the first data set) or be unnecessary to transmit the received first data set to a next node in one or more of the following cases: if all data packets whose sequence numbers are less than X are not received; if all data packets whose sequence numbers are greater than X are not received; if all data packets whose sequence numbers are between X and Y are not received; if all data packets whose sequence numbers are less than X and greater than Y are not received; if all data packets whose sequence numbers are less than X are not received in a given time; if all data packets whose sequence numbers are greater than X are not received in a given time; if all data packets whose sequence numbers are between X and Y are not received in a given time; if all data packets whose sequence numbers are less than X and greater than Y are not received in a given time; or the like.

In some embodiments, the handling of the first data set by the first communications device based on the first information may include that: if a part of the data packets in the first data set can support successful decoding of the first data set, the first communications device may transmit the part of the data packets to a third communications device. For example, the first communications device may transmit only the part of the data packets to the third communications device.

In some embodiments, the handling of the first data set by the first communications device based on the first information may include that: if a part of the data packets in the first data set can support successful decoding of the first data set, the first communications device may not transmit another data packet different from the part of the data packets to a third communications device. Alternatively, after determining that the part of the data packets in the first data set can support successful decoding of the first data set, the first communications device may not transmit another data packet subsequently received in the first data set to the third communications device.

The third communications device may be a next node of the first communications device on a transmission path of the first data set. Therefore, the third communications device may also be referred to as or replaced with the next node.

In some embodiments, the part of the data packets may refer to data packets that meet a specific condition. For example, the part of the data packets may include one or more of the following: data packets, the number of which is greater than or equal to a first threshold; a data packet, the size of which meets a second threshold; or the like.

The first threshold is not limited in embodiments of this application. For example, the first threshold may be a percentage (such as X%). In this case, the part of the data packets may refer to: data packets, the number of which is greater than or equal to X% of a total quantity of data packets in the first data set. In other words, if X% of the data packets in the first data set can support successful decoding of the first data set, the first communications device may transmit only the X% of the data packets to the third communications device. Alternatively, the first threshold may be a positive integer (for example, Y). In this case, the part of the data packets may refer to data packets the number of which is greater than or equal to Y. In other words, if Y data packets in the first data set can support successful decoding of the first data set, the first communications device may transmit only the Y data packets to the third communications device.

In some embodiments, the data packets of which the size meets the second threshold may mean data packets of which the size is less than or equal to the second threshold. In this case, the first communications device may transmit the data packets of which the size is less than or equal to the second threshold to the third communications device.

In some embodiments, the data packets of which the size meets the second threshold may mean data packets of which the size is greater than or equal to the second threshold. In this case, the first communications device may transmit the data packets of which the size is greater than or equal to the second threshold to the third communications device.

In some embodiments, the data packets of which the size meets the second threshold may mean one or more data packets whose total size meets the second threshold, that is, the part of the data packets may mean a part of the data packets in the first data set whose total size meets the second threshold.

In embodiments of this application, the first communications device can transmit only a part of the data packets in the first data set based on the first information, so that bandwidth resource consumption can be reduced and system congestion can be avoided while ensuring that the first data set can be successfully decoded. For example, in a case that a transmission resource is limited or congestion occurs, this manner may effectively reduce resource consumption or avoid system congestion.

In an example, that if the part of the data packets in the first data set can support successful decoding of the first data set, the first communications device may transmit the part of the data packets to the third communications device may include that: if the first information acquired by the first communications device includes an allowable quantity X of lost packets for the first data set and/or a quantity Y of data packets required to be successfully transmitted to the receive end in the first data set, the first communications device may transmit only Y data packets in the first data set or only Z (Z is equal to a total quantity of data packets in the first data set minus X) data packets in the first data set to the third communications device.

In another example, that if the part of the data packets in the first data set can support successful decoding of the first data set, the first communications device may transmit the part of the data packets to the third communications device may include that: if the first information acquired by the first communications device includes an allowable packet loss size X for the first data set and/or a size Y of data packets required to be successfully transmitted to the receive end in the first data set, the first communications device may transmit only data packets whose total size is greater than or equal to Y in the first data set or only data packets whose total size is greater than or equal to Z (Z is equal to a total size of all data packets in the first data set minus X) in the first data set to the third communications device.

In still another example, that if the part of the data packets in the first data set can support successful decoding of the first data set, the first communications device may transmit the part of the data packets to the third communications device may include that: if the first information acquired by the first communications device includes boundary information between original and repair data packets in the first data set, the first communications device may determine, based on the boundary information, data packets in the first data set to be transmitted to the third communications device. In an example in which the first information indicates that a data packet whose sequence number is X is used as a boundary or indicates that a data packet whose sequence number is X and a data packet whose sequence number is Y are used as boundaries, the first communications device may transmit, to the third communications device, one or more of the following: all data packets whose sequence numbers are less than X; all data packets whose sequence numbers are greater than X; all data packets whose sequence numbers are between X and Y; or all data packets whose sequence numbers are less than X and greater than Y.

In an example, that if the part of the data packets in the first data set can support successful decoding of the first data set, the first communications device may not transmit another data packet different from the part of the data packets to the third communications device may include that: if the first information acquired by the first communications device includes an allowable quantity X of lost packets for the first data set and/or a quantity Y of data packets required to be successfully transmitted to the receive end in the first data set, the first communications device may transmit only Y data packets in the first data set or only Z (Z is equal to a total quantity of data packets in the first data set minus X) data packets in the first data set to the third communications device, and may not transmit the other data packets.

In another example, that if the part of the data packets in the first data set can support successful decoding of the first data set, the first communications device may not transmit another data packet different from the part of the data packets to the third communications device may include that: if the first information acquired by the first communications device includes an allowable packet loss size X for the first data set and/or a size Y of data packets required to be successfully transmitted to the receive end in the first data set, the first communications device may transmit only data packets whose total size is greater than or equal to Y in the first data set or only data packets whose total size is greater than or equal to Z (Z is equal to a total size of all data packets in the first data set minus X) in the first data set to the third communications device, and may not transmit the other data packets.

In still another example, that if the part of the data packets in the first data set can support successful decoding of the first data set, the first communications device may not transmit another data packet different from the part of the data packets to the third communications device may include that: if the first information acquired by the first communications device includes boundary information between original and repair data packets in the first data set, the first communications device may determine, based on the boundary information, data packets in the first data set to be transmitted to the third communications device and data packets not to be transmitted. In an example in which the first information indicates that a data packet whose sequence number is X is used as a boundary or indicates that a data packet whose sequence number is X and a data packet whose sequence number is Y are used as boundaries, the first communications device may transmit, to the third communications device, one or more of the following: all data packets whose sequence numbers are less than X; all data packets whose sequence numbers are greater than X; all data packets whose sequence numbers are between X and Y; or all data packets whose sequence numbers are less than X and greater than Y.

In some embodiments, after acquiring the first information, the first communications device may transmit, based on the first information, packet loss information for the first data set statistically determined by the first communications device to another communications device (for example, the fourth communications device in the following), which is described below with reference to FIG. 5.

FIG. 5 is a schematic flowchart of still another method for wireless communication according to Embodiment 1 of this application. The method illustrated in FIG. 5 may include step S510 and step S520.

In step S510, a first communications device acquires first information. The first information may be used for indicating an association relationship between data packets in a first data set.

For detailed descriptions of step S510, reference may be made to the related discussion of step S310. For brevity, details are not described herein again.

In step S520, the first communications device transmits fourth information to a fourth communications device. The fourth information may be used for indicating packet loss information for the first data set.

In some embodiments, the fourth information may be statistically determined by the first communications device based on the first information.

In this case, it may be considered that the first communications device may instruct, based on the sensed first information, the fourth communications device to handle the first data set. For example, after sensing the first information, the first communications device may transmit, to the fourth communications device based on a packet loss status of data packets in the first data set, an instruction to perform integrated handling on the first data set, so as to instruct the fourth communications device to handle the first data set.

In some embodiments, the first communications device may transmit one or more of the fourth information or fifth information to the fourth communications device. For example, the first communications device transmits the fourth information to the fourth communications device. Alternatively, the first communications device transmits the fifth information to the fourth communications device. Alternatively, the first communications device transmits the fifth information to the fourth communications device. The following describes the fifth information.

In some embodiments, the fifth information may be used for instructing to handle the first data set. For example, the fifth information may be used for instructing the fourth communications device to handle the first data set. Therefore, in some embodiments, the fifth information may also be understood as or referred to as an instruction to handle the first data set.

Content of the fifth information is not specifically limited in embodiments of this application. For example, the fifth information may include one or more of the following: a sequence number of the first data set; indication information for instructing the fourth communications device to discard the first data set (or discard a data packet in the first data set); or indication information for instructing the fourth communications device to retransmit the first data set (or retransmit a data packet in the first data set). In this way, the fourth communications device may determine a data set on which operation needs to be performed and an operation that needs to be performed on the data set.

For example, the fifth information may include the sequence number of the first data set and the indication information for instructing the fourth communications device to discard the first data set, so that the fourth communications device determines a data set to be discarded. Alternatively, the fifth information may include the sequence number of the first data set and the indication information for instructing the fourth communications device to retransmit the first data set, so that the fourth communications device determines a data set to be retransmitted.

For descriptions of content included in the fourth information, how the first communications device statistically determines the fourth information, and the like, reference may be made to descriptions of Embodiment 2 in the following, and details are not described herein.

For ease of understanding, the following provides some examples of Embodiment 1. It should be noted that the following examples may be used alone or in combination with each other. For example, Example 1 may be used alone or in combination with Example 3 or Example 4. Alternatively, Example 2 may be used alone, may be used in combination with Example 3 or Example 4, or the like. In addition, the following examples may be combined in a manner other than those listed above.

It should be further noted that, the following examples are used to explain the procedure in Embodiment 1, and Embodiment 1 is not limited only to the following examples. For example, the second communications device in Example 1 may also be a terminal device or the like.

It should be further noted that, for detailed description of some concepts mentioned in the following example, for example, content included in the first information, a manner of acquiring the first information, and an implementation in which the first data set is handled based on the first information, reference may be made to the foregoing description. For detailed description of some concepts mentioned in the following example, for example, content included in packet loss information, reference may alternatively be made to the description of Embodiment 2 below.

### Example 1: The first information is acquired by using a control plane, and an access network device handles the first data set.

In Example 1, the first communications device is an access network device, and the second communications device is an AF. In other words, in Example 1, the AF may provide the first information for integrated handling of the first data set for the access network device.

In some embodiments, the second communications device in Example 1 may also be understood as a network element (such as a PCF, an SMF, or an AMF) in a core network.

FIG. 6 is a schematic flowchart of still another method for wireless communication according to Embodiment 1. The method illustrated in FIG. 6 may include step S610 to step S640.

In step S610, a second communications device transmits first information to a PCF directly or by using an NEF.

In an implementation, the second communications device may transmit a first message to the PCF. The first message is used for requesting to perform integrated handling on a first data set, and the first message includes the first information.

In some embodiments, the first message may be provided to the PCF by setting up a procedure such as an AF session with required QoS procedure or an AF session with required QoS update procedure.

In some embodiments, the first information may be used to enable integrated handling on the first data set.

In some embodiments, the second communications device may enable integrated handling on the first data set by using second information (or enabling information). In some embodiments, the second communications device may transmit the second information and the first information to the PCF together, or may separately (independently) transmit the second information and the first information to the PCF.

In some embodiments, the first message may further include third information, which indicates time window information for performing integrated handling on the first data set. Alternatively, the third information may be used to assist in integrated handling on the first data set. For example, when the first communications device fails to receive a data packet in a time window indicated in the third information, the first communications device may consider the data packet as a lost data packet or an error data packet.

In step S620, the PCF transmits the first information to an SMF.

In some embodiments, in addition to transmitting the first information to the SMF, the PCF may further transmit one or more of the following: the second information or the third information.

In some embodiments, the PCF may transmit the foregoing information (one or more of the first information, the second information, or the third information) to the SMF by including the information in a policy and charging control (policy and charging control, PCC) rule.

In step S630, the SMF transmits the first information to the first communications device.

In some embodiments, in addition to transmitting the first information to the first communications device, the SMF may further transmit one or more of the following: the second information or the third information.

In some embodiments, the SMF may transmit the foregoing information (one or more of the first information, the second information, or the third information) to the first communications device by using an AMF.

In step S640, the first communications device performs integrated handling on the first data set based on the first information.

In an implementation, after receiving the first information, the first communications device may perform corresponding resource scheduling based on a reception status of data packets in the first data set. For example, if a quantity of valid data packets, received by the first communications device, from the first data set is not sufficient to support successful decoding of the first data set, the first communications device may discard the first data set. Alternatively, when data packets from the first data set that are received by the first communications device are sufficient to support successful decoding of the first data set, the first communications device may no longer transmit any subsequently received data packet of the first data set to a next node.

In another implementation, after receiving one or more of the first information, the second information, or the third information, the first communications device may perform corresponding resource scheduling based on a reception status of data packets in the first data set. For example, if a quantity of valid data packets from the first data set that are received by the first communications device in a time window indicated by the third information is not sufficient to support successful decoding of the first data set, the first communications device may discard the first data set. Alternatively, when the data packets from the first data set that are received by the first communications device in a time window indicated by the third information are sufficient to support successful decoding of the first data set, the first communications device may no longer transmit any subsequently received data packets of the first data set to a next node.

### Example 2: The first information is acquired by using a control plane, and an access network device and a UPF handle the first data set.

In Example 2, the first communications device is an access network device or a UPF, and the second communications device is an AF. In other words, in Example 1, the AF may provide the first information for integrated handling of the first data set for the access network device and/or the UPF.

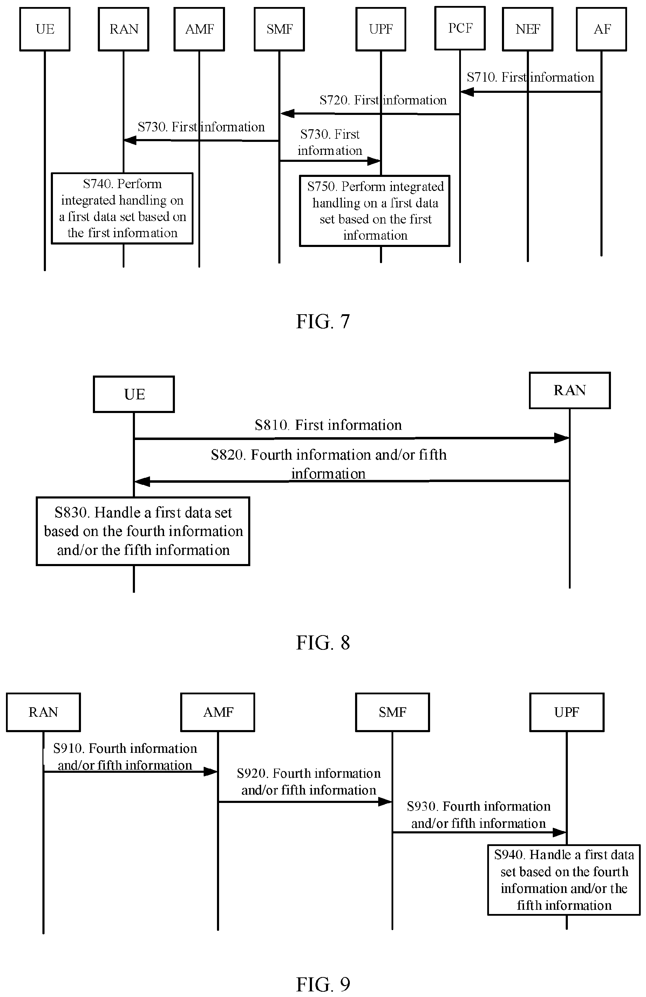

FIG. 7 is a schematic flowchart of still another method for wireless communication according to Embodiment 1. The method illustrated in FIG. 7 may include step S710 to step S740.

In step S710, a second communications device transmits first information to a PCF directly or by using an NEF.

In an implementation, the second communications device may transmit a first message to the PCF. The first message is used for requesting to perform integrated handling on a first data set, and the first message includes the first information.

In some embodiments, the first message may be provided to the PCF by setting up a procedure such as an AF session with required QoS procedure or an AF session with required QoS update procedure.

In some embodiments, the first information may be used to enable integrated handling on the first data set.

In some embodiments, the second communications device may enable integrated handling on the first data set by using second information (or enabling information). In some embodiments, the second communications device may transmit the second information and the first information to the PCF together, or may separately (independently) transmit the second information and the first information to the PCF.

In some embodiments, the first message may further include third information, which indicates time window information for performing integrated handling on the first data set. Alternatively, the third information may be used to assist in integrated handling on the first data set. For example, when the first communications device fails to receive a data packet in a time window indicated by the third information, the first communications device may consider the data packet as a lost data packet or an error data packet.

In step S720, the PCF transmits the first information to an SMF.

In some embodiments, in addition to transmitting the first information to the SMF, the PCF may further transmit one or more of the following information: the second information or the third information.

In some embodiments, the PCF may transmit the foregoing information (one or more of the first information, the second information, or the third information) to the SMF by including the information in a policy and charging control (policy and charging control, PCC) rule.

In step S730, the SMF separately transmits the first information to an access network device and a UPF.

In some embodiments, in addition to transmitting the first information to the access network device and UPF, the SMF may further transmit one or more of the following: the second information or the third information.

In some embodiments, the SMF may transmit the foregoing information (one or more of the first information, the second information, or the third information) to the access network device by using an AMF. In some embodiments, the SMF may directly transmit the foregoing information to the UPF.

In step S740, the access network device performs integrated handling on the first data set based on the first information.

In an implementation, after receiving the first information, the access network device may perform corresponding resource scheduling based on a reception status of data packets in the first data set. For example, if a quantity of valid data packets from the first data set that are received by the access network device is not sufficient to support successful decoding of the first data set, the access network device may discard the first data set. Alternatively, when the data packets from the first data set that are received by the access network device are sufficient to support successful decoding of the first data set, the access network device may no longer transmit other data packets of the first data set that are subsequently received to a next node.

In another implementation, after receiving one or more of the first information, the second information, or the third information, the access network device may perform corresponding resource scheduling based on a reception status of data packets in the first data set. For example, if a quantity of valid data packets from the first data set that are received by the access network device in a time window indicated by the third information is not sufficient to support successful decoding of the first data set, the access network device may discard the first data set. Alternatively, when the data packets from the first data set that are received by the access network device in a time window indicated by the third information are sufficient to support successful decoding of the first data set, the access network device may no longer transmit other data packets of the first data set that are subsequently received to a next node.

In step S750, the UPF performs integrated handling on the first data set based on the first information.

In an implementation, after receiving the first information, the UPF may perform corresponding resource scheduling based on a reception status of data packets in the first data set. For example, if a quantity of valid data packets from the first data set that are received by the UPF is not sufficient to support successful decoding of the first data set, the UPF may discard the first data set. Alternatively, when data packets from the first data set that are received by the UPF are sufficient to support successful decoding of the first data set, the UPF may no longer transmit other data packets of the first data set that are subsequently received to a next node.

In another implementation, after receiving one or more of the first information, the second information, or the third information, the UPF may perform corresponding resource scheduling based on a reception status of data packets in the first data set. For example, if a quantity of valid data packets from the first data set that received by the UPF in a time window indicated by the third information is not sufficient to support successful decoding of the first data set, the UPF may discard the first data set. Alternatively, when data packets from the first data set that are received by the UPF in a time window indicated by the third information are sufficient to support successful decoding of the first data set, the UPF may no longer transmit other data packets of the first data set that are subsequently received to a next node.

An execution sequence of step S740 and step S750 is not limited in embodiments of this application. For example, step S740 may be performed before step S750, or may be performed after step S750, or may be performed simultaneously with step S750, or the like.

### Example 3: An access network device assists a terminal device in integrated handling of the first data set in uplink transmission.

In Example 3, the first communications device is an access network device, and both the second communications device and the fourth communications device are terminal devices.

In Example 3, the fourth communications device may handle uplink data flow of the first data set based on fourth information and/or fifth information.

FIG. 8 is a schematic flowchart of still another method for wireless communication according to Embodiment 1. The method illustrated in FIG. 8 may include step S810 to step S830.

In step S810, a second communications device (a terminal device) transmits first information to a first communications device.

In some embodiments, in addition to transmitting the first information to the first communications device, the second communications device may further transmit third indication information to the first communications device. The third indication information may be used for instructing the first communications device to report fourth information (namely, packet loss information for the first data set that is statistically determined by the first communications device) to a fourth communications device.

In step S820, the first communications device transmits the fourth information and/or fifth information to the fourth communications device (a terminal device).

The fourth information may be used for indicating packet loss information for the first data set. The fifth information may be used for instructing to handle the first data set.

In an example, the first communications device may transmit the fourth information to the fourth communications device, so that the fourth communications device handles the first data set based on one or more of the fourth information, local configuration information, or an application layer indication. In addition, the fourth communications device may adjust an allocation policy of transmission resources for the first data set based on one or more of the fourth information, the local configuration information, or the application layer indication.

In another example, the first communications device may transmit the fifth information to the fourth communications device, so that the fourth communications device handles the first data set based on one or more of the fifth information or local configuration information.

In still another example, the first communications device may transmit the fourth information and the fifth information to the fourth communications device.

In step S830, the fourth communications device handles the first data set based on the fourth information and/or the fifth information.

For example, the fourth communications device handles the first data set based on one or more of the fourth information, local configuration information, or application layer indication, and/or the fourth communications device adjusts an allocation policy of transmission resources for the first data set based on one or more of the fourth information, local configuration information, or application layer indication.

Alternatively, the fourth communications device handles the first data set based on one or more of the fifth information or local configuration information.

### Example 4: An access network device assists a UPF in integrated handling of the first data set in downlink transmission.

In Example 4, the first communications device is an access network device, and the fourth communications device is a UPF.

In Example 4, the fourth communications device may handle downlink data flow of the first data set based on fourth information and/or fifth information.

For the downlink data flow, after statistically determining the packet loss information for the first data set in a downlink service flow, the first communications device may provide a packet loss status of the first data set and/or a handling indication for the first data set to the fourth communications device by using an AMF or an SMF, or may use a user plane, and add, packet loss information for the first data set and/or a handling indication for the first data set to a header of an uplink data packet so as to provde the same to a UPF.

In some embodiments, the first communications device may statistically determine packet loss information for the first data set based on the first information provided by the second communications device or a local configuration.

FIG. 9 is a schematic flowchart of still another method for wireless communication according to Embodiment 1. The method illustrated in FIG. 9 may include step S910 to step S940.

In step S910, a first communications device transmits fourth information and/or fifth information to an AMF.

In step S920, the AMF transmits the fourth information and/or the fifth information to an SMF.

In step S930, the SMF transmits the fourth information and/or the fifth information to a fourth communications device.

In step S940, the fourth communications device handles a first data set based on the received fourth information and/or the received fifth information.

In some embodiments, the fourth communications device may handle the first data set based on one or more of the following: the fourth information, the fifth information, or local configuration information.

For example, the fourth communications device handles the first data set based on one or more of the fourth information, local configuration information, or application layer indication, and/or the fourth communications device adjusts an allocation policy of transmission resources for the first data set based on one or more of the fourth information, local configuration information, or application layer indication.

Alternatively, the fourth communications device handles the first data set based on one or more of the fifth information or local configuration information.

### Example 5: The first information is acquired by using a user plane, and an access network device or a UPF handles the first data set.

In Example 5, the first communications device is an access network device or a UPF, and the second communications device is an AF.

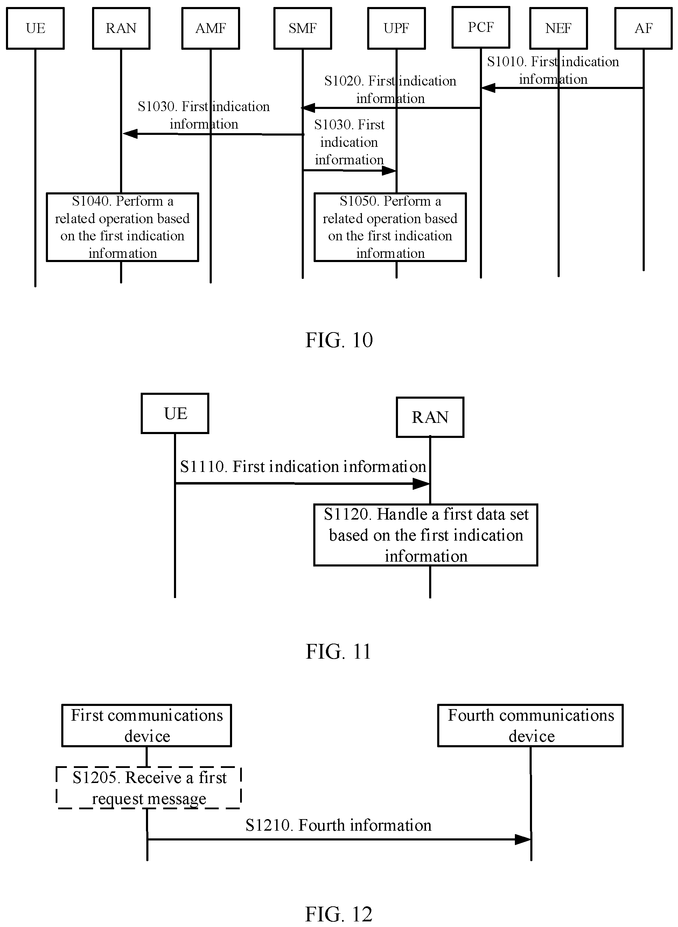

FIG. 10 is a schematic flowchart of still another method for wireless communication according to Embodiment 1. The method illustrated in FIG. 10 may include step S1010 to step S1040.

In step S1010, a second communications device transmits first indication information to a PCF. The first indication information is used to enable a first communications device to perform integrated handling on a first data set.

In some embodiments, in addition to transmitting the first indication information to the PCF, the second communications device may further transmit second indication information to the PCF. The second indication information is used for determining a target service flow corresponding to the first data set. For example, the second indication information may include flow descriptive information for the target service flow, which assists a network element in a core network and/or the first communications device in determining the target service flow corresponding to the first data set.

In step S1020, the PCF transmits the first indication information to an SMF.

In some embodiments, the PCF may transmit the first indication information and the second indication information to the SMF.

In some embodiments, if the second communications device is a terminal device, the terminal device may transmit the first indication information and the second indication information to the SMF by using an access network device, an AMF, or the like.

In step S1030, the SMF transmits the first indication information to a UPF and the access network device.

In some embodiments, the SMF may transmit the first indication information and the second indication information to the UPF and the access network device.

In an implementation, the SMF may directly transmit the first indication information and the second indication information to the UPF.

In an implementation, the SMF may transmit the first indication information and the second indication information to the access network device by using the AMF.

From step S1040 to step S1050, each of the access network device and the UPF performs a related operation based on the first indication information.

In some embodiments, each of the access network device and the UPF performs a related operation based on the first indication information and the second indication information.

The following describes a case that each of the UPF and the access network device performs a related operation based on the first indication information (or based on the first indication information and the second indication information) by using an example in which the target service flow is an uplink service flow and an example in which the target service flow is a downlink service flow.

In a case that the target service flow is the uplink service flow, the access network device may read first information in a header of an application layer data packet in the first data set, and add the first information to a header of a GTP-U data packet in the first data set. The UPF may read the first information in the header of the GTP-U data packet transmitted by the access network device, and perform integrated handling on the first data set based on a reception status of data packets in the first data set.

In a case that the target service flow is the downlink service flow, the UPF may read first information in a header of an application layer data packet in the first data set, and add the first information to a header of a GTP-U data packet in the first data set. The access network device may read the first information in the header of the GTP-U data packet transmitted by the UPF, and perform integrated handling on the first data set based on a reception status of data packets in the first data set.

An execution sequence of step S1040 and step S1050 is not limited in embodiments of this application. For example, step S1040 may be performed before step S1050, or may be performed after step S1050, or may be performed simultaneously with step S1050, or the like.

### Example 6: The first information is acquired by using a user plane, and an access network device handles the first data set.

In Example 6, the first communications device is an access network device, and the second communications device is a terminal device. Alternatively, in Example 6, the terminal device may trigger the access network device to read the first information from a header of a data packet, and perform integrated handling on the first data set.

FIG. 11 is a schematic flowchart of still another method for wireless communication according to Embodiment 1. The method illustrated in FIG. 11 may include step S1110 and step S1120.

In step S1110, a second communications device transmits first indication information to a first communications device. The first indication information is used to enable a first communications device to perform integrated handling on a first data set.

In some embodiments, in addition to transmitting the first indication information to the first communications device, the second communications device may further transmit second indication information to the first communications device. The second indication information is used for determining a target service flow corresponding to the first data set. For example, the second indication information may include one or more of the following: a QFI, a PDU session ID, a DNN, S-NSSAI, an IP 5-tuple, a flow direction, or the like.

In step S1120, the first communications device handles the first data set based on the first indication information.

In an implementation, the first communications device may read the first information in the header of the data packet in the first data set based on the first indication information and/or local configuration, and handle the first data set based on a reception status of data packets in the first data set.

### Embodiment 2

FIG. 12 is a schematic flowchart of a method for wireless communication according to Embodiment 2. The method illustrated in FIG. 12 is described from a perspective of interaction between a first communications device and a fourth communications device. For ease of understanding, the following first describes the fourth communications device.

The fourth communications device is a node, device, or network element that receives fourth information transmitted by the first communications device. The fourth communications device is not specifically limited in embodiments of this application, provided that the fourth communications device can receive the fourth information. The following exemplarily describes several possible implementations of the fourth communications device.

In some embodiments, the fourth communications device may be an initiating end of a target service corresponding to a first data set.

In some embodiments, the fourth communications device may be a node, device, or network element on a transmission path of the first data set.

In some embodiments, the fourth communications device may be a node, device, or network element configured to perform data analysis on data of the first data set.

In some embodiments, the fourth communications device may be an AF.

In some embodiments, the fourth communications device may be a terminal device.

In some embodiments, the fourth communications device may be an access network device.

In some embodiments, the fourth communications device may be a network element in a core network. For example, the fourth communications device may be a network element such as a UPF, a PCF, an SMF, or an AMF in a core network. Alternatively, the fourth communications device may be another network element such as an NWDAF in the core network.

The method illustrated in FIG. 12 is described below. The method illustrated in FIG. 12 may include step S1210.

In step S1210, a first communications device transmits fourth information to a fourth communications device.

In some embodiments, the fourth information may be used for indicating packet loss information for a first data set.

Content included in the fourth information is not specifically limited in embodiments of this application. For example, the fourth information may include one or more of the following: a sequence number of the first data set; a quantity of data packets, received by the first communications device, in the first data set; a size of data packets, received by the first communications device, in the first data set; a quantity of data packets, failing to be received by the first communications device, in the first data set; a size of data packets, failing to be received by the first communications device, in the first data set; a ratio of a quantity of data packets, failing to be received by the first communications device, in the first data set to a total quantity of data packets in the first data set; a ratio of a size of data packets, failing to be received by the first communications device, in the first data set to a total size of all data packets in the first data set; sequence numbers of data packets, received by the first communications device, in the first data set; a type of data packets, received by the first communications device, in the first data set, or the like.

The sequence number of the first data set may be used by the fourth communications device to determine a data set required to be handled. Alternatively, the sequence number of the first data set may be used for indicating the specific data set with which the fourth information is associated as packet loss information.

In some embodiments, after receiving the fourth information, the fourth communications device may determine, based on the fourth information and/or local configuration, how to handle the first data set, for example, how to adjust an allocation policy of transmission resources for a target service flow corresponding to the first data set.

In some embodiments, the fourth information may be transmitted by using a control plane.

In some embodiments, the fourth information may be transmitted by using one or more of the following: an NEF, a PCF, an SMF, or an AMF.

For example, the first communications device is an access network device, and the fourth communications device is an AF. In this case, the fourth information may be transmitted by using the control plane, or the fourth information may be transmitted by using one or more of the NEF, the PCF, the SMF, or the AMF. In an example, the fourth information may be transmitted by using the NEF, the PCF, the SMF, and the AMF. In another example, the fourth information may be transmitted by using the PCF, the SMF, and the AMF.

For example, the first communications device is an access network device, and the fourth communications device is an SMF. In this case, the fourth information may be transmitted by using a control plane, or the fourth information may be transmitted by using an AMF.

In some embodiments, the fourth information may be transmitted by using air interface signalling. For example, the first communications device is an access network device, and the fourth communications device is a terminal device, and the fourth information may thus be transmitted by using air interface signalling.

In some embodiments, the fourth information may be transmitted by using a user plane.

In some embodiments, the fourth information may be carried in a header of a GTP-U data packet in the first data set, or the fourth information may be carried in a header of an application layer data packet in the first data set. For example, if the fourth information is transmitted by using the user plane, the fourth information may be carried in the header of the GTP-U data packet in the first data set, or the fourth information may be carried in the header of the application layer data packet in the first data set.

In some embodiments, if the fourth information is carried in the header of the GTP-U data packet in the first data set, after receiving the GTP-U data packet, the fourth communications device may read the fourth information carried in the header of the GTP-U data packet, and add the fourth information to the header of the application layer data packet in the first data set, so that the fourth communications device transmits the fourth information to another node, device, or network element. For example, the first communications device is an access network device, and the fourth communications device is a UPF. In this case, after reading the fourth information in the header of the GTP-U data packet transmitted by the access network device, the UPF may add the fourth information to the header of the application layer data packet in the first data set, so as to transmit the fourth information to an AS or a DN or another node.

In other words, in some embodiments, after acquiring the fourth information, the fourth communications device may transmit the fourth information to another node, device, or network element by using the user plane.

In some embodiments, if the fourth information is carried in the header of the GTP-U data packet in the first data set, after receiving the GTP-U data packet, the fourth communications device may read the fourth information carried in the header of the GTP-U data packet, and transmit the fourth information by using one or more of the following: the NEF, the PCF, or the SMF, so as to transmit the fourth information to another node, device, or network element. For example, the first communications device is an access network device, and the fourth communications device is a UPF. In this case, after reading the fourth information in the header of the GTP-U data packet transmitted by the access network device, the UPF may transmit the fourth information to the AF or another node by using one or more of the NEF, the PCF, or the SMF. In an example, the UPF may transmit the fourth information to the AF by using the NEF, the PCF, and the SMF. In another example, the UPF may transmit the fourth information to the AF by using the PCF and the SMF. Embodiments of this application are not limited thereto. For example, the UPF may directly transmit the fourth information to the AF by using the NEF, or the like.

In other words, in some embodiments, after acquiring the fourth information, the fourth communications device may transmit the fourth information to another node, device, or network element by using the control plane.

In some embodiments, if the fourth information is carried in the header of the application layer data packet in the first data set, after receiving the application layer data packet, the fourth communications device may transparently transmit the application layer data packet to another node, device, or network element, so that another node, device, or network element acquires the fourth information from the header of the application layer data packet. For example, the first communications device is an access network device, and the fourth communications device is a UPF. In this case, after receiving the application layer data packet in the first data set transmitted by the access network device, the UPF may transparently transmit the application layer data packet to an AS or a DN or another node.

In some embodiments, the first communications device may transmit fourth information to the fourth communications device when sensing (acquiring) the first information. For example, after the second communications device transmits the first information to the first communications device, the first communications device may transmit the fourth information to the fourth communications device based on a packet loss status of data packets in the first data set, so that the fourth communications device handles the first data set based on the fourth information. In this case, it may be considered that Embodiment 2 may be used in combination with Embodiment 1.

In some embodiments, the first communications device may transmit fourth information to the fourth communications device without sensing the first information. For example, the first communications device may statistically determine a packet loss status of data packets in the first data set based on an indication from another communications device, and transmit the fourth information to the fourth communications device, so that the fourth communications device handles the first data set based on the fourth information. In this case, it may be considered that Embodiment 2 may be used alone.

In some embodiments, the transmitting, by the first communications device, the fourth information to the fourth communications device may be triggered based on a request from another communications device.

Still referring to FIG. 12, in some embodiments, the method illustrated in FIG. 12 may further include step S1205. In step S1205, the first communications device receives a first request message. The first request message may be used to request the first communications device to measure (or statistically determine) packet loss information for the first data set. In this way, after measuring the packet loss information for the first data set, the first communications device may transmit the packet loss information for the first data set acquired by means of measurement to the fourth communications device.

In some embodiments, the first request message may be used to request for subscription of packet loss information exposed by the first communications device. Therefore, in some embodiments, the first request message may also be understood as or referred to as a packet loss information subscription request message.

In some embodiments, the first request message may be transmitted by the fourth communications device.

In some embodiments, the first request message may be transmitted by another communications device different from the fourth communications device. For example, the fourth communications device is a network element (such as an SMF, a PCF, or an NWDAF) in a core network, and the first request message may be transmitted by a terminal device or an AF.

Content included in the first request message is not limited in embodiments of this application. For example, the first request message may include one or more of the following: indication information for requesting measurement of the packet loss information; information about a target data flow corresponding to the first data set; time window information for measuring the packet loss information; period information for reporting the packet loss information; threshold information for reporting the packet loss information; or indication information from the fourth communications device.

The indication information for requesting measurement of the packet loss information may be used for instructing the first communications device to measure the packet loss information for the first data set.

In some embodiments, the information about the target data flow corresponding to the first data set may be indicated, for example, by using service flow descriptive information.

In some embodiments, the packet loss information for the first data set may be periodically reported. In some embodiments, if the packet loss information for the first data set is periodically reported, period information for reporting the packet loss information may be carried in the first request message, to indicate a period for reporting packet loss information by the first communications device.

In some embodiments, the reporting of the packet loss information for the first data set may be conditionally triggered. For example, when a packet loss rate of the first data set reaches a threshold, the first communications device reports the packet loss information for the first data set to the fourth communications device. In some embodiments, if the packet loss information for the first data set is triggered based on a condition, the first request message may carry information about a trigger condition. In an example where the trigger condition is that the first communications device reports the packet loss information for the first data set to the fourth communications device when the packet loss rate of the first data set reaches a threshold, the first request message may carry threshold information for reporting the packet loss information.

In some embodiments, the time window information for measuring the packet loss information may be used for instructing the first communications device to statistically determine the packet loss information for the first data set in a range of a time window corresponding to the information.

For example, a time window indicated by the time window information for measuring the packet loss information in the first request message is a first time window. In this case, in some embodiments, the first communications device may transmit the packet loss information such as an average packet loss rate, a maximum packet loss rate, or a minimum packet loss rate in the first time window to the fourth communications device.

The indication information from the fourth communications device is used for indicating a target node, device, or network element to which the first communications device reports the packet loss information, or the indication information from the fourth communications device is used for instructing the first communications device to report the fourth information to the fourth communications device (namely, a target node, device, or network element). In other words, the determination of the fourth communications device as the target node, device, or network element of the transmission of the fourth information by the first communications device is based on the indication information.

In some embodiments, after the first communications device transmits the fourth information to the fourth communications device, the fourth communications device may dynamically adjust an FEC algorithm or adjust FEC coding efficiency based on the fourth information. In other words, the fourth communications device may dynamically adjust a ratio of a repair data packet to total data packets in the first data set based on the fourth information.

Transmitting, by the first communications device, the fourth information to the fourth communications device helps the fourth communications device adjust coding efficiency based on the fourth information in a timely manner, thereby avoiding a waste of resources due to excessive repair data packets, or avoiding reduction in an error control capability due to too low coding efficiency.

For ease of understanding, the following provides some examples of Embodiment 2. It should be noted that, the following examples are used to describe the procedure in Embodiment 2, and Embodiment 2 is not limited only to the following examples. For example, the fourth communications device in Example 7 may alternatively be a terminal device or the like.

It should be further noted that, for detailed description of some concepts mentioned in the following example, for example, content included in the fourth information, and content included in the first request message, reference may be made to the foregoing discussion.

### Example 7: An access network device transmits the fourth information to an AF by using a control plane.

In Example 7, the first communications device is an access network device, the fourth communications device is an AF, and the device that transmits a first request message is also the AF.

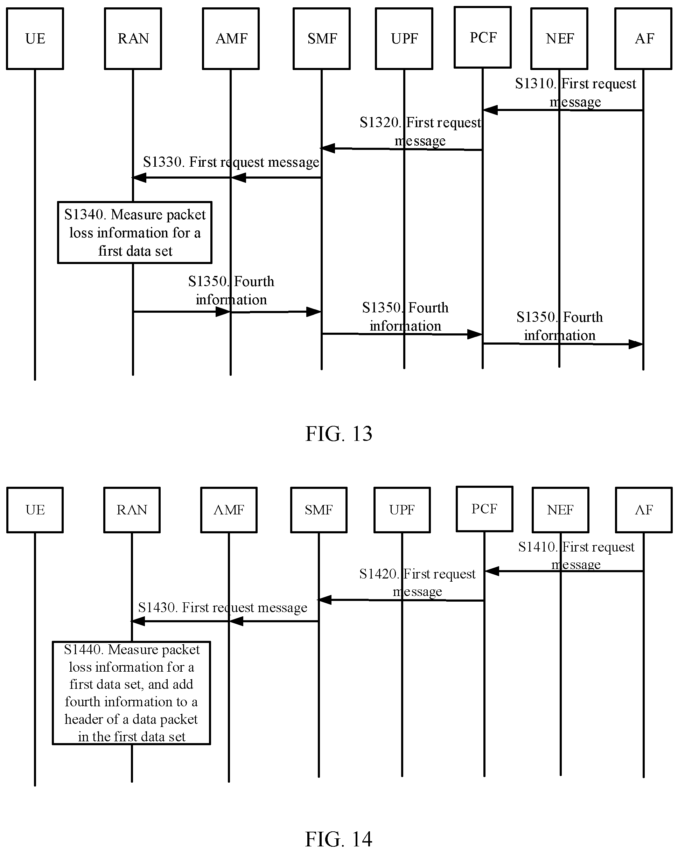

FIG. 13 is a schematic flowchart of another method for wireless communication according to Embodiment 2. The method illustrated in FIG. 13 may include step S1310 to step S1350.

In step S1310, a fourth communications device transmits a first request message to a PCF.

In some embodiments, the fourth communications device may directly transmit the first request message to the PCF.

In some embodiments, the fourth communications device may transmit the first request message to the PCF by using an NEF.

In step S1320, the PCF transmits the first request message to an SMF.

In step S1330, the SMF transmits the first request message to a first communications device. For example, the SMF may transmit the first request message to the first communications device by using an AMF.

In step S1340, the first communications device measures packet loss information for a first data set.

In some embodiments, the first communications device may measure packet loss information for each data set in a target service flow.

In some embodiments, when a reporting period is reached or a reporting threshold is met, the first communications device may transmit fourth information to the fourth communications device.

In step S1350, the first communications device transmits the fourth information to the fourth communications device.

In this example, the first communications device may transmit the fourth information to the SMF, and then the SMF forwards the fourth information to the PCF. Finally, the PCF directly transmits the fourth information to the fourth communications device or the PCF transmits the fourth information to the fourth communications device by using an NEF.

### Example 8: An access network device transmits the fourth information to an AF or a terminal device by using a user plane.

In Example 8, the first communications device is an access network device, the fourth communications device is an AF or a terminal device, and the device that transmits a first request message is the AF.

FIG. 14 is a schematic flowchart of still another method for wireless communication according to Embodiment 2. The method illustrated in FIG. 14 may include step S1410 to step S1440.

In step S1410, an AF transmits a first request message to a PCF.

In some embodiments, the AF may directly transmit the first request message to the PCF.

In some embodiments, the AF may transmit the first request message to the PCF by using an NEF.

In step S1420, the PCF transmits the first request message to an SMF.

In step S1430, the SMF transmits the first request message to a first communications device. For example, the SMF may transmit the first request message to the first communications device by using an AMF.

In step S1440, the first communications device measures packet loss information for a first data set, and adds fourth information to a header of a data packet in the first data set.

In some embodiments, the first communications device may measure packet loss information for each data set in a target service flow.

In some embodiments, the first communications device may add the fourth information to an uplink data packet in the first data set, so as to transmit the fourth information to an AS or a DN.

In some embodiments, the first communications device may add the fourth information to a downlink data packet in the first data set, so as to transmit the fourth information to a terminal device.

### Example 9: An access network device transmits the fourth information to a UPF by using a user plane, and the UPF transmits the fourth information to an AF.

In Example 9, the first communications device is an access network device, the fourth communications device is an AF, and the device that transmits a first request message is also the AF.

In some embodiments, it may also be considered that the first communications device is an access network device, and the fourth communications device is a UPF. Alternatively, it may be considered that the first communications device is a UPF, the fourth communications device is an AF, or the like.

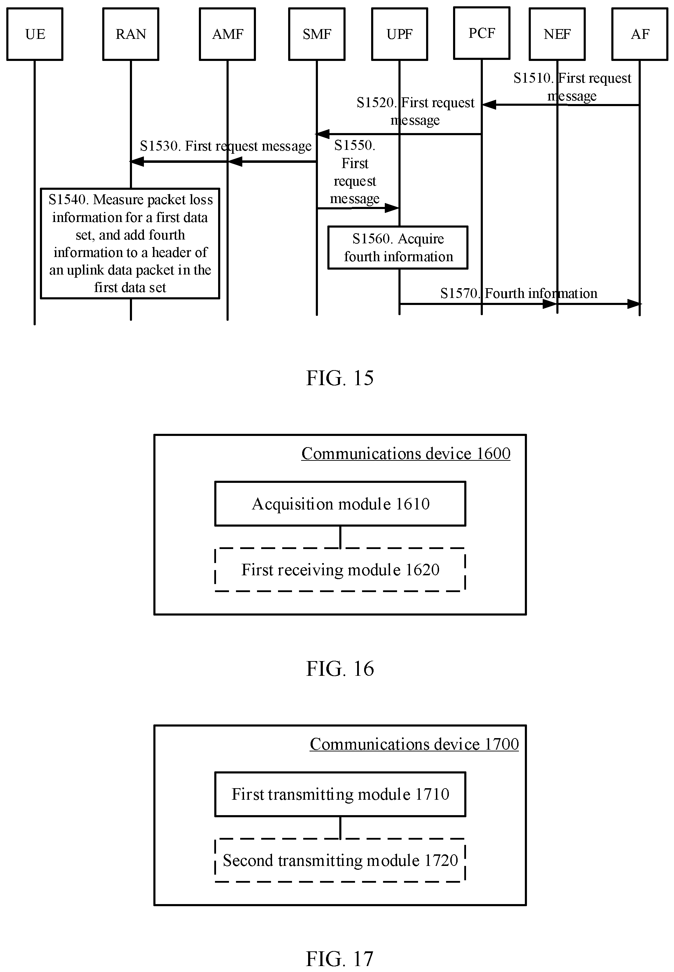

FIG. 15 is a schematic flowchart of still another method for wireless communication according to Embodiment 2. The method illustrated in FIG. 15 may include step S1510 to step S1570.

In step S1510, an AF transmits a first request message to a PCF.

In some embodiments, the AF may directly transmit the first request message to the PCF.

In some embodiments, the AF may transmit the first request message to the PCF by using an NEF.

In step S1520, the PCF transmits the first request message to an SMF.

In step S1530, the SMF transmits the first request message to a first communications device. For example, the SMF may transmit the first request message to the first communications device by using an AMF.

In step S1540, an access network device measures packet loss information for the first data set, and adds fourth information to a header of an uplink data packet in the first data set.

In some embodiments, the access network device adding the fourth information to the header of the uplink data packet in the first data set may mean that the access network device adds fourth information to a header of an uplink GTP-U data packet in the first data set.

In some embodiments, the access network device adds the fourth information to a header of a data packet in the first data set only when a reporting condition is met (for example, a reporting period is met or a reporting threshold is met).

In some embodiments, the access network device adds the fourth information to headers of all data packets (such as all GTP-U data packets). In this case, a UPF may need to determine whether the reporting condition is met, and when the reporting condition is met, the UPF transmits the fourth information to the AF.

In step S1550, the SMF transmits the first request message to the UPF. The purpose of SMF transmitting the first request message to the UPF is to trigger the UPF to read the header of the GTP-U data packet transmitted by the access network device, to acquire the fourth information.

In some embodiments, step S1550 may be performed at the same time as step S1530, or may be performed after step S1530, or may be performed before step S1530, which is not limited in embodiments of this application.

In step S1560, the UPF acquires the fourth information.

In an implementation, the UPF may read the header of the GTP-U data packet transmitted by the access network device to acquire the fourth information.

In step S1570, the UPF transmits the fourth information to the AF.

In some embodiments, when the reporting condition is met (for example, a reporting period or a reporting threshold is met), the UPF transmits the fourth information to the AF.

In some embodiments, the UPF may transmit the fourth information to the AF by using the NEF.

In some embodiments, the UPF may transmit the fourth information to the AF by using the SMF, the PCF.

In some embodiments, the UPF may transmit the fourth information to the AF by using the SMF, the PCF, the NEF.

The method embodiments of this application are described above in detail with reference to FIG. 1 to FIG. 15. Apparatus embodiments of this application are described below in detail with reference to FIG. 16 to FIG. 20. It should be understood that the descriptions of the method embodiments correspond to descriptions of the apparatus embodiments, and therefore, for parts that are not described in detail, reference may be made to the foregoing method embodiments.

FIG. 16 is a schematic diagram of a structure of a communications device according to an embodiment of this application. The communications device 1600 shown in FIG. 16 may be any first communications device mentioned in Embodiment 1. The communications device 1600 may include an acquisition module 1610.

The acquisition module 1610 may be configured to acquire first information, where the first information is used for indicating an association relationship between data packets in a first data set.

Optionally, the first information includes forward error correction FEC-related information for the first data set.

Optionally, the first information is associated with one or more of the following: FEC type information of the first data set; information about allowable packet loss for the first data set; or information about a data packet in the first data set.

Optionally, the first information includes one or more of the following: FEC type information of the first data set; an allowable quantity of lost packets for the first data set; an allowable packet loss size for the first data set; a quantity of data packets required to be successfully transmitted to a receive end in the first data set; a size of data packets required to be successfully transmitted to a receive end in the first data set; a ratio of an allowable quantity of lost packets for the first data set to a total quantity of data packets in the first data set; a ratio of an allowable packet loss size for the first data set to a total size of all data packets in the first data set; a ratio of a quantity of data packets required to be successfully transmitted to a receive end in the first data set to a total quantity of data packets in the first data set; a ratio of a size of data packets required to be successfully transmitted to a receive end in the first data set to a total size of all data packets in the first data set; a quantity of data packets in the first data set; a size of data packets in the first data set; type information of data packets in the first data set; sequence numbers of data packets in the first data set; information indicating importance of data packets in the first data set; information indicating a mapping relationship between original and repair data packets in the first data set; or boundary information between original and repair data packets in the first data set.

Optionally, the first information is acquired in one or more of the following manners: the first information being transmitted to the first communications device from a second communications device; the first information being acquired by the first communications device based on local configuration information of the first communications device; the first information being acquired by the first communications device by querying subscription information; or the first information being acquired by the first communications device by reading a header of a data packet in the first data set.

Optionally, the acquisition module is configured to receive a first message transmitted by the second communications device, where the first message is used to request handling of the first data set, and the first message includes the first information.

Optionally, the first message further includes one or more of the following: second information for enabling the first communications device to handle the first data set; or third information for indicating time window information for handling the first data set.

Optionally, FEC coding of the first data set is static FEC coding or semi-static FEC coding.

Optionally, the first information is acquired by using a control plane.

Optionally, the communications device further includes a first receiving module 1620, configured to receive first indication information transmitted by a second communications device, where the first indication information is used for instructing to handle the first data set.

Optionally, the communications device further includes a second receiving module, configured to receive second indication information transmitted by the second communications device, where the second indication information is used for determining a target service flow corresponding to the first data set.

Optionally, the communications device further includes: an adding module, configured to add the first information to a header of a data packet in the first data set; and a first transmitting module, configured to transmit, to a third communications device, the data packet to which the first information is added.

Optionally, FEC coding of the first data set is dynamic FEC coding.

Optionally, the first information is acquired by using a user plane.

Optionally, the second communications device is an AF, a terminal device, or a network element in a core network.

Optionally, the communications device further includes a handling module, configured to handle the first data set based on the first information.

Optionally, the handling module is configured to: in a case that a quantity of valid data packets from the first data set is not sufficient to support successful decoding of the first data set, discard the first data set; and/or in a case that a part of data packets in the first data set is capable of supporting successful decoding of the first data set, transmit the part of the data packets to a third communications device; and/or in a case that a part of data packets in the first data set is capable of supporting successful decoding of the first data set, skip transmitting another data packet in the first data set that is different from the part of the data packets to a third communications device.

Optionally, the part of the data packets includes one or more of the following: data packets, the number of which is greater than or equal to a first threshold; or data packets, the size of which meets a second threshold.

Optionally, the communications device further includes a second transmitting module, configured to transmit fourth information to a fourth communications device, where the fourth information is used for indicating packet loss information for the first data set.

Optionally, the fourth information includes one or more of the following: a sequence number of the first data set; a quantity of data packets, received by the first communications device, in the first data set; a size of data packets, received by the first communications device, in the first data set; a quantity of data packets, failing to be received by the first communications device, in the first data set; a size of data packets, failing to be received by the first communications device, in the first data set; a ratio of a quantity of data packets, failing to be received by the first communications device, in the first data set to a total quantity of data packets in the first data set; a ratio of a size of data packets, failing to be received by the first communications device, in the first data set to a total size of all data packets in the first data set; sequence numbers of data packets, received by the first communications device, in the first data set; or a type of data packets, received by the first communications device, in the first data set.

Optionally, the communications device further includes a third transmitting module, configured to transmit fifth information to the fourth communications device, where the fifth information is used for instructing to handle the first data set.

Optionally, the fifth information includes one or more of the following: a sequence number of the first data set; indication information for instructing the fourth communications device to discard a data packet in the first data set; or indication information for instructing the fourth communications device to retransmit a data packet in the first data set.

Optionally, the communications device further includes a third receiving module, configured to receive third indication information, where the third indication information is used for instructing the first communications device to report the fourth information.

Optionally, the fourth communications device is an AF, a terminal device, an access network device, or a network element in a core network.

Optionally, the first communications device is one of the following: an access network device, a UPF, or a terminal device.

FIG. 17 is a schematic diagram of a structure of a communications device according to an embodiment of this application. The communications device 1700 shown in FIG. 17 may be any second communications device mentioned in Embodiment 1. The communications device 1700 may include a first transmitting module 1710.

The first transmitting module 1710 may be configured to transmit first information to a first communications device, where the first information is used for indicating an association relationship between data packets in a first data set.

Optionally, the first information includes forward error correction FEC-related information for the first data set.

Optionally, the first information is associated with one or more of the following: FEC type information of the first data set; information about allowable packet loss for the first data set; or information about a data packet in the first data set.

Optionally, the first information includes one or more of the following: FEC type information of the first data set; an allowable quantity of lost packets for the first data set; an allowable packet loss size for the first data set; a quantity of data packets required to be successfully transmitted to a receive end in the first data set; a size of data packets required to be successfully transmitted to a receive end in the first data set; a ratio of an allowable quantity of lost packets for the first data set to a total quantity of data packets in the first data set; a ratio of an allowable packet loss size for the first data set to a total size of all data packets in the first data set; a ratio of a quantity of data packets required to be successfully transmitted to a receive end in the first data set to a total quantity of data packets in the first data set; a ratio of a size of data packets required to be successfully transmitted to a receive end in the first data set to a total size of all data packets in the first data set; a quantity of data packets in the first data set; a size of data packets in the first data set; type information of data packets in the first data set; sequence numbers of data packets in the first data set; information indicating importance of data packets in the first data set; information indicating a mapping relationship between original and repair data packets in the first data set; boundary information between original and repair data packets in the first data set; or the like.

Optionally, the first information is acquired in one or more of the following manners: the first information being transmitted to the first communications device from a second communications device; the first information being acquired by the first communications device based on local configuration information of the first communications device; the first information being acquired by the first communications device by querying subscription information; or the first information being acquired by the first communications device by reading a header of a data packet in the first data set.

Optionally, the first transmitting module is configured to transmit a first message to the first communications device, where the first message is used to request handling of the first data set, and the first message includes the first information.

Optionally, the first message further includes one or more of the following information: second information for enabling the first communications device to handle the first data set; or third information for indicating time window information for handling the first data set.

Optionally, FEC coding of the first data set is static FEC coding or semi-static FEC coding.

Optionally, the first information is acquired by using a control plane.

Optionally, the communications device further includes a second transmitting module 1720, configured to transmit first indication information to the first communications device, where the first indication information is used for instructing to handle the first data set.

Optionally, the communications device further includes a third transmitting module, configured to transmit second indication information to the first communications device, where the second indication information is used for determining a target service flow corresponding to the first data set.

Optionally, the communications device further includes: an adding module, configured to add the first information to a header of a data packet in the first data set; and a fourth transmitting module, configured to transmit, to a third communications device, the data packet to which the first information is added.

Optionally, FEC coding of the first data set is dynamic FEC coding.

Optionally, the first information is acquired by using a user plane.

Optionally, the first information is used to handle the first data set.

Optionally, in a case that a quantity of valid data packets from the first data set is not sufficient to support successful decoding of the first data set, the first data set is discarded; and/or in a case that a part of data packets in the first data set is capable of supporting successful decoding of the first data set, the part of the data packets is transmitted; and/or in a case that a part of data packets in the first data set is capable of supporting successful decoding of the first data set, another data packet in the first data set that is different from the part of the data packets is not transmitted.

Optionally, the part of the data packets includes one or more of the following: data packets, the number of which is greater than or equal to a first threshold; or data packets, the size of which meets a second threshold.

Optionally, the first communications device is one of the following: an access network device, a UPF, or a terminal device.

Optionally, the second communications device is one of the following: an AF, a terminal device, or a network element in a core network.

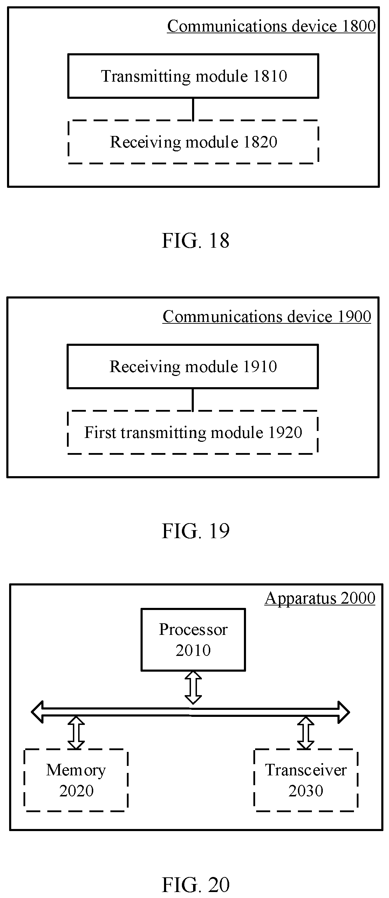

Optionally, the first transmitting module 1710 may be a transceiver 2030. The communications device 1700 may further include a processor 2010 and a memory 2020, which are specifically shown in FIG. 20.

FIG. 18 is a schematic diagram of a structure of a communications device according to Embodiment 2. The communications device 1800 shown in FIG. 18 may be any first communications device mentioned in Embodiment 2. The communications device 1800 may include a transmitting module 1810.

The transmitting module 1810 may be configured to transmit fourth information to a fourth communications device, where the fourth information is used for indicating packet loss information for a first data set.

Optionally, the fourth information includes one or more of the following: a sequence number of the first data set; a quantity of data packets, received by the first communications device, in the first data set; a size of data packets, received by the first communications device, in the first data set; a quantity of data packets, failing to be received by the first communications device, in the first data set; a size of data packets, failing to be received by the first communications device, in the first data set; a ratio of a quantity of data packets, failing to be received by the first communications device, in the first data set to a total quantity of data packets in the first data set; a ratio of a size of data packets, failing to be received by the first communications device, in the first data set to a total size of all data packets in the first data set; sequence numbers of data packets, received by the first communications device, in the first data set; or a type of data packets, received by the first communications device, in the first data set.

Optionally, the communications device further includes a receiving module 1820, configured to receive a first request message, where the first request message is used to request the first communications device to measure packet loss information for the first data set.

Optionally, the first request message includes one or more of the following information: indication information for requesting to measure the packet loss information; information about a target data flow corresponding to the first data set; time window information for measuring the packet loss information; period information for reporting the packet loss information; threshold information for reporting the packet loss information; or indication information from the fourth communications device.

Optionally, the fourth information is transmitted by using one or more of the following: an NEF, a PCF, an SMF, or an AMF.

Optionally, the fourth information is transmitted by using a control plane.

Optionally, the fourth information is carried in a header of a GTP-U data packet in the first data set, or the fourth information is carried in a header of an application layer data packet in the first data set.

Optionally, the fourth information is transmitted by using a user plane.

Optionally, the first communications device is an access network device or a UPF.

Optionally, the fourth communications device is an AF, a terminal device, an access network device, or a network element in a core network.

Optionally, the transmitting module 1810 may be a transceiver 2030. The communications device 1800 may further include a processor 2010 and a memory 2020, which are specifically shown in FIG. 20.

FIG. 19 is a schematic diagram of a structure of another communications device according to Embodiment 2. The communications device 1900 shown in FIG. 19 may be any fourth communications device mentioned in Embodiment 2. The communications device 1900 may include a receiving module 1910.

The receiving module 1910 may be configured to receive fourth information transmitted by a first communications device, where the fourth information is used for indicating packet loss information for a first data set.

Optionally, the fourth information includes one or more of the following: a sequence number of the first data set; a quantity of data packets, received by the first communications device, in the first data set; a size of data packets, received by the first communications device, in the first data set; a quantity of data packets, failing to be received by the first communications device, in the first data set; a size of data packets, failing to be received by the first communications device, in the first data set; a ratio of a quantity of data packets, failing to be received by the first communications device, in the first data set to a total quantity of data packets in the first data set; a ratio of a size of data packets, failing to be received by the first communications device, in the first data set to a total size of all data packets in the first data set; sequence numbers of data packets, received by the first communications device, in the first data set; or a type of data packets, received by the first communications device, in the first data set.

Optionally, the communications device further includes a first transmitting module 1920, configured to transmit a first request message to the first communications device, where the first request message is used to request the first communications device to measure packet loss information for the first data set.

Optionally, the first request message includes one or more of the following information: indication information for requesting to measure the packet loss information; information about a target data flow corresponding to the first data set; time window information for measuring the packet loss information; period information for reporting the packet loss information; threshold information for reporting the packet loss information; or indication information from the fourth communications device.

Optionally, the fourth information is transmitted by using one or more of the following: an NEF, a PCF, an SMF, or an AMF.

Optionally, the fourth information is transmitted by using a control plane.

Optionally, the fourth information is carried in a header of a GTP-U data packet in the first data set, or the fourth information is carried in a header of an application layer data packet in the first data set.

Optionally, if the fourth information is carried in the header of the GTP-U data packet in the first data set, the communications device further includes: an adding module, configured to add the fourth information to the header of the application layer data packet in the first data set after reading the fourth information carried in the header of the GTP-U data packet in the first data set; or a second transmitting module, configured to transmit the fourth information by using one or more of an NEF, a PCF, or an SMF after reading the fourth information carried in the header of the GTP-U data packet in the first data set.

Optionally, the fourth information is transmitted by using a user plane.

Optionally, the first communications device is an access network device or a UPF.

Optionally, the fourth communications device is an AF, a terminal device, an access network device, or a network element in a core network.

Optionally, the receiving module 1910 may be a transceiver 2030. The communications device 1900 may further include a processor 2010 and a memory 2020, which are specifically shown in FIG. 20.

FIG. 20 is a schematic diagram of a structure of a communications apparatus according to an embodiment of this application. Dashed lines in FIG. 20 indicate that a unit or module is optional. The apparatus 2000 may be configured to implement the methods described in the foregoing method embodiments. The apparatus 2000 may be a chip, a terminal device, or a network device.

The apparatus 2000 may include one or more processors 2010. The processor 2010 may support the apparatus 2000 in implementing the methods described in the foregoing method embodiments. The processor 2010 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2000 may further include one or more memories 2020. The memory 2020 stores a program, where the program may be executed by the processor 2010, to cause the processor 2010 to execute the methods described in the method embodiments. The memory 2020 may be separate from the processor 2010 or may be integrated into the processor 2010.

The apparatus 2000 may further include a transceiver 2030. The processor 2010 may communicate with another device or chip by using the transceiver 2030. For example, the processor 2010 may transmit data to and receive data from another device or chip through the transceiver 2030.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for wireless communication, comprising:
acquiring, by a first communications device, first information, wherein the first information is used for indicating an association relationship between data packets in a first data set.

2. The method according to claim 1, wherein the first information comprises forward error correction FEC-related information for the first data set.

3. The method according to claim 1 or 2, wherein the first information is associated with one or more of following:
FEC type information of the first data set;
information about allowable packet loss for the first data set; or
information about data packets in the first data set.

4. The method according to any one of claims 1 to 3, wherein the first information comprises one or more of following:
FEC type information of the first data set;
an allowable quantity of lost packets for the first data set;
an allowable packet loss size for the first data set;
a quantity of data packets required to be successfully transmitted to a receive end in the first data set;
a size of data packets required to be successfully transmitted to a receive end in the first data set;
a ratio of an allowable quantity of lost packets for the first data set to a total quantity of data packets in the first data set;
a ratio of an allowable packet loss size for the first data set to a total size of all data packets in the first data set;
a ratio of a quantity of data packets required to be successfully transmitted to a receive end in the first data set to a total quantity of data packets in the first data set;
a ratio of a size of data packets required to be successfully transmitted to a receive end in the first data set to a total size of all data packets in the first data set;
a quantity of data packets in the first data set;
a size of data packets in the first data set;
type information of data packets in the first data set;
sequence numbers of data packets in the first data set;
information indicating importance of data packets in the first data set;
information indicating a mapping relationship between original and repair data packets in the first data set; or
boundary information between original and repair data packets in the first data set.

5. The method according to any one of claims 1 to 4, wherein the first information is acquired in one or more of following modes:
the first information being transmitted to the first communications device from a second communications device;
the first information being acquired by the first communications device based on local configuration information of the first communications device;
the first information being acquired by the first communications device by querying subscription information; or
the first information being acquired by the first communications device by reading a header of a data packet in the first data set.

6. The method according to any one of claims 1 to 5, wherein the acquiring, by the first communications device, the first information comprises:
receiving, by the first communications device, a first message transmitted by a second communications device, wherein the first message is used to request handling of the first data set, and the first message comprises the first information.

7. The method according to claim 6, wherein the first message further comprises one or more of following:
second information for enabling the first communications device to handle the first data set; or
third information for indicating time window information for handling the first data set.

8. The method according to claim 6 or 7, wherein FEC coding of the first data set is static FEC coding or semi-static FEC coding.

9. The method according to any one of claims 6 to 8, wherein the first information is acquired by using a control plane.

10. The method according to any one of claims 1 to 5, wherein the method further comprises:
receiving, by the first communications device, first indication information transmitted by a second communications device, wherein the first indication information is used for instructing to handle the first data set.

11. The method according to claim 10, wherein the method further comprises:
receiving, by the first communications device, second indication information transmitted by the second communications device, wherein the second indication information is used for determining a target service flow corresponding to the first data set.

12. The method according to claim 10 or 11, wherein the method further comprises:
adding, by the first communications device, the first information to a header of a data packet in the first data set; and
transmitting, by the first communications device to a third communications device, the data packet to which the first information is added.

13. The method according to any one of claims 10 to 12, wherein FEC coding of the first data set is dynamic FEC coding.

14. The method according to any one of claims 10 to 13, wherein the first information is acquired by using a user plane.

15. The method according to any one of claims 5 to 14, wherein the second communications device is an AF, a terminal device, or a network element in a core network.

16. The method according to any one of claims 1 to 15, wherein the method further comprises:
handling, by the first communications device, the first data set based on the first information.

17. The method according to claim 16, wherein the handling, by the first communications device, the first data set based on the first information comprises:
in a case that a quantity of valid data packets from the first data set is not sufficient to support successful decoding of the first data set, discarding, by the first communications device, the first data set; and/or
in a case that a part of data packets in the first data set is capable of supporting successful decoding of the first data set, transmitting, by the first communications device, the part of the data packets to a third communications device; and/or
in a case that a part of data packets in the first data set is capable of supporting successful decoding of the first data set, skipping, by the first communications device, transmitting another data packet in the first data set that is different from the part of the data packets to a third communications device.

18. The method according to claim 17, wherein the part of the data packets comprises one or more of following: data packets, the number of which is greater than or equal to a first threshold; or data packets, the size of which meets a second threshold.

19. The method according to any one of claims 1 to 15, wherein the method further comprises:
transmitting, by the first communications device, fourth information to a fourth communications device, wherein the fourth information is used for indicating packet loss information for the first data set.

20. The method according to claim 19, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packets, received by the first communications device, in the first data set; or
a type of data packets, received by the first communications device, in the first data set.

21. The method according to claim 19 or 20, wherein the method further comprises:
transmitting, by the first communications device, fifth information to the fourth communications device, wherein the fifth information is used for instructing to handle the first data set.

22. The method according to claim 21, wherein the fifth information comprises one or more of following:
a sequence number of the first data set;
indication information for instructing the fourth communications device to discard a data packet in the first data set; or
indication information for instructing the fourth communications device to retransmit a data packet in the first data set.

23. The method according to any one of claims 19 to 22, wherein before the transmitting, by the first communications device, the fourth information to the fourth communications device, the method further comprises:
receiving, by the first communications device, third indication information, wherein the third indication information is used for instructing the first communications device to report the fourth information.

24. The method according to any one of claims 19 to 23, wherein the fourth communications device is an AF, a terminal device, an access network device, or a network element in a core network.

25. The method according to any one of claims 1 to 24, wherein the first communications device is one of following: an access network device, a UPF, or a terminal device.

26. A method for wireless communication, comprising:
transmitting, by a second communications device, first information to a first communications device, wherein the first information is used for indicating an association relationship between data packets in a first data set.

27. The method according to claim 26, wherein the first information comprises forward error correction FEC-related information for the first data set.

28. The method according to claim 26 or 27, wherein the first information is associated with one or more of following:
FEC type information of the first data set;
information about allowable packet loss for the first data set; or
information about data packets in the first data set.

29. The method according to any one of claims 26 to 28, wherein the first information comprises one or more of following:
FEC type information of the first data set;
an allowable quantity of lost packets for the first data set;
an allowable packet loss size for the first data set;
a quantity of data packets required to be successfully transmitted to a receive end in the first data set;
a size of data packets required to be successfully transmitted to a receive end in the first data set;
a ratio of an allowable quantity of lost packets for the first data set to a total quantity of data packets in the first data set;
a ratio of an allowable packet loss size for the first data set to a total size of all data packets in the first data set;
a ratio of a quantity of data packets required to be successfully transmitted to a receive end in the first data set to a total quantity of data packets in the first data set;
a ratio of a size of data packets required to be successfully transmitted to a receive end in the first data set to a total size of all data packets in the first data set;
a quantity of data packets in the first data set;
a size of data packets in the first data set;
type information of data packets in the first data set;
sequence numbers of data packets in the first data set;
information indicating importance of data packets in the first data set;
information indicating a mapping relationship between original and repair data packets in the first data set; or
boundary information between original and repair data packets in the first data set.

30. The method according to any one of claims 26 to 29, wherein the first information is acquired in one or more of following modes:
the first information being transmitted to the first communications device from a second communications device;
the first information being acquired by the first communications device based on local configuration information of the first communications device;
the first information being acquired by the first communications device by querying subscription information; or
the first information being acquired by the first communications device by reading a header of a data packet in the first data set.

31. The method according to any one of claims 26 to 30, wherein the transmitting, by the second communications device, the first information to the first communications device comprises:
transmitting, by the second communications device, a first message to the first communications device, wherein the first message is used to request handling of the first data set, and the first message comprises the first information.

32. The method according to claim 31, wherein the first message further comprises one or more of following:
second information for enabling the first communications device to handle the first data set; or
third information for indicating time window information for handling the first data set.

33. The method according to claim 31 or 32, wherein FEC coding of the first data set is static FEC coding or semi-static FEC coding.

34. The method according to any one of claims 31 to 33, wherein the first information is acquired by using a control plane.

35. The method according to any one of claims 26 to 30, wherein the method further comprises:
transmitting, by the second communications device, first indication information to the first communications device, wherein the first indication information is used for instructing to handle the first data set.

36. The method according to claim 35, wherein the method further comprises:
transmitting, by the second communications device, second indication information to the first communications device, wherein the second indication information is used for determining a target service flow corresponding to the first data set.

37. The method according to claim 35 or 36, wherein the method further comprises:
adding, by the second communications device, the first information to a header of a data packet in the first data set; and
transmitting, by the second communications device to a third communications device, the data packet to which the first information is added.

38. The method according to any one of claims 35 to 37, wherein FEC coding of the first data set is dynamic FEC coding.

39. The method according to any one of claims 35 to 38, wherein the first information is acquired by using a user plane.

40. The method according to any one of claims 26 to 39, wherein the first information is used for handling of the first data set.

41. The method according to claim 40, wherein
in a case that a quantity of valid data packets from the first data set is not sufficient to support successful decoding of the first data set, discarding the first data set; and/or
in a case that a part of data packets in the first data set is capable of supporting successful decoding of the first data set, transmitting the part of the data packets; and/or
in a case that a part of data packets in the first data set is capable of supporting successful decoding of the first data set, skipping transmitting another data packet in the first data set that is different from the part of the data packets.

42. The method according to claim 41, wherein the part of the data packets comprises one or more of following: data packets, the number of which is greater than or equal to a first threshold; or data packets, the size of which meets a second threshold.

43. The method according to any one of claims 26 to 42, wherein the first communications device is one of following: an access network device, a UPF, or a terminal device.

44. The method according to any one of claims 26 to 43, wherein the second communications device is one of following: an AF, a terminal device, or a network element in a core network.

45. A method for wireless communication, comprising:
transmitting, by a first communications device, fourth information to a fourth communications device, wherein the fourth information is used for indicating packet loss information for a first data set.

46. The method according to claim 45, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packet, received by the first communications device, in the first data set; or
a type of data packets, received by the first communications device, in the first data set.

47. The method according to claim 45 or 46, before the transmitting, by the first communications device, the fourth information to the fourth communications device, the method further comprises:
receiving, by the first communications device, a first request message, wherein the first request message is used to request the first communications device to measure the packet loss information for the first data set.

48. The method according to claim 47, wherein the first request message comprises one or more of following:
indication information for requesting to measure the packet loss information;
information about a target data flow corresponding to the first data set;
time window information for measuring the packet loss information;
period information for reporting the packet loss information;
threshold information for reporting the packet loss information; or
indication information from the fourth communications device.

49. The method according to any one of claims 45 to 48, wherein the fourth information is transmitted by using one or more of following: an NEF, a PCF, an SMF, or an AMF.

50. The method according to claim 49, wherein the fourth information is transmitted by using a control plane.

51. The method according to any one of claims 45 to 48, wherein the fourth information is carried in a header of a GTP-U data packet in the first data set, or the fourth information is carried in a header of an application layer data packet in the first data set.

52. The method according to claim 51, wherein the fourth information is transmitted by using a user plane.

53. The method according to any one of claims 45 to 52, wherein the first communications device is an access network device or a UPF.

54. The method according to any one of claims 45 to 53, wherein the fourth communications device is an AF, a terminal device, an access network device, or a network element in a core network.

55. A method for wireless communication, comprising:
receiving, by a fourth communications device, fourth information transmitted by a first communications device, wherein the fourth information is used for indicating packet loss information for a first data set.

56. The method according to claim 55, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packets, received by the first communications device, in the first data set; or
a type of data packets, received by the first communications device, in the first data set.

57. The method according to claim 55 or 56, wherein before the receiving, by the fourth communications device, the fourth information transmitted by the first communications device, the method further comprises:
transmitting, by the fourth communications device, a first request message to the first communications device, wherein the first request message is used to request the first communications device to measure the packet loss information for the first data set.

58. The method according to claim 57, wherein the first request message comprises one or more of following:
indication information for requesting to measure the packet loss information;
information about a target data flow corresponding to the first data set;
time window information for measuring the packet loss information;
period information for reporting the packet loss information;
threshold information for reporting the packet loss information; or
indication information from the fourth communications device.

59. The method according to any one of claims 55 to 58, wherein the fourth information is transmitted by using one or more of following: an NEF, a PCF, an SMF, or an AMF.

60. The method according to claim 59, wherein the fourth information is transmitted by using a control plane.

61. The method according to any one of claims 55 to 58, wherein the fourth information is carried in a header of a GTP-U data packet in the first data set, or the fourth information is carried in a header of an application layer data packet in the first data set.

62. The method according to claim 61, wherein in a case that the fourth information is carried in the header of the GTP-U data packet in the first data set, the method further comprises:
after reading the fourth information carried in the header of the GTP-U data packet in the first data set, adding, by the fourth communications device, the fourth information to the header of the application layer data packet in the first data set; or
after reading the fourth information carried in the header of the GTP-U data packet in the first data set, transmitting, by the fourth communications device, the fourth information by using one or more of following: an NEF, a PCF, or an SMF.

63. The method according to claim 61 or 62, wherein the fourth information is transmitted by using a user plane.

64. The method according to any one of claims 55 to 63, wherein the first communications device is an access network device or a UPF.

65. The method according to any one of claims 55 to 64, wherein the fourth communications device is an AF, a terminal device, an access network device, or a network element in a core network.

66. A communications device, wherein the communications device is a first communications device, and the communications device comprises:
an acquisition module, configured to acquire first information, wherein the first information is used for indicating an association relationship between data packets in a first data set.

67. The communications device according to claim 66, wherein the first information comprises forward error correction FEC-related information of the first data set.

68. The communications device according to claim 66 or 67, wherein the first information is associated with one or more of following:
FEC type information of the first data set;
information about allowable packet loss for the first data set; or
information about a data packet in the first data set.

69. The communications device according to any one of claims 66 to 68, wherein the first information comprises one or more of following:
FEC type information of the first data set;
an allowable quantity of lost packets for the first data set;
an allowable packet loss size for the first data set;
a quantity of data packets required to be successfully transmitted to a receive end in the first data set;
a size of data packets required to be successfully transmitted to a receive end in the first data set;
a ratio of an allowable quantity of lost packets for the first data set to a total quantity of data packets in the first data set;
a ratio of an allowable packet loss size for the first data set to a total size of all data packets in the first data set;
a ratio of a quantity of data packets required to be successfully transmitted to a receive end in the first data set to a total quantity of data packets in the first data set;
a ratio of a size of data packets required to be successfully transmitted to a receive end in the first data set to a total size of all data packets in the first data set;
a quantity of data packets in the first data set;
a size of data packets in the first data set;
type information of data packets in the first data set;
sequence numbers of data packets in the first data set;
information indicating importance of data packets in the first data set;
information indicating a mapping relationship between original and repair data packets in the first data set; or
boundary information between original and repair data packets in the first data set.

70. The communications device according to any one of claims 66 to 69, wherein the first information is acquired in one or more of following modes:
the first information being transmitted to the first communications device from a second communications device;
the first information being acquired by the first communications device based on local configuration information of the first communications device;
the first information being acquired by the first communications device by querying subscription information; or
the first information being acquired by the first communications device by reading a header of a data packet in the first data set.

71. The communications device according to any one of claims 66 to 70, wherein the acquisition module is configured to:
receive a first message transmitted by a second communications device, wherein the first message is used to request handling of the first data set, and the first message comprises the first information.

72. The communications device according to claim 71, wherein the first message further comprises one or more of following:
second information for enabling the first communications device to handle the first data set; or
third information for indicating time window information for handling the first data set.

73. The communications device according to claim 71 or 72, wherein FEC coding of the first data set is static FEC coding or semi-static FEC coding.

74. The communications device according to any one of claims 71 to 73, wherein the first information is acquired by using a control plane.

75. The communications device according to any one of claims 66 to 70, wherein the communications device further comprises:
a first receiving module, configured to receive first indication information transmitted by a second communications device, wherein the first indication information is used for instructing to handle the first data set.

76. The communications device according to claim 75, wherein the communications device further comprises:
a second receiving module, configured to receive second indication information transmitted by the second communications device, wherein the second indication information is used for determining a target service flow corresponding to the first data set.

77. The communications device according to claim 75 or 76, wherein the communications device further comprises:
an adding module, configured to add the first information to a header of a data packet in the first data set; and
a first transmitting module, configured to transmit, to a third communications device, the data packet to which the first information is added.

78. The communications device according to any one of claims 75 to 77, wherein FEC coding of the first data set is dynamic FEC coding.

79. The communications device according to any one of claims 75 to 78, wherein the first information is acquired by using a user plane.

80. The communications device according to any one of claims 70 to 79, wherein the second communications device is an AF, a terminal device, or a network element in a core network.

81. The communications device according to any one of claims 66 to 80, wherein the communications device further comprises:
a handling module, configured to handle the first data set based on the first information.

82. The communications device according to claim 81, wherein the handling module is configured to:
in a case that a quantity of valid data packets from the first data set is not sufficient to support successful decoding of the first data set, discard the first data set; and/or
in a case that a part of data packets in the first data set is capable of supporting successful decoding of the first data set, transmit the the part of the data packets to a third communications device; and/or
in a case that a part of data packets in the first data set is capable of supporting successful decoding of the first data set, skip transmitting another data packet in the first data set that is different from the part of the data packets to a third communications device.

83. The communications device according to claim 82, wherein the part of the data packets comprises one or more of following: data packets, the number of which is greater than or equal to a first threshold; or data packets, the size of which meets a second threshold.

84. The communications device according to any one of claims 66 to 80, wherein the communications device further comprises:
a second transmitting module, configured to transmit fourth information to a fourth communications device, wherein the fourth information is used for indicating packet loss information for the first data set.

85. The communications device according to claim 84, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packets, received by the first communications device, in the first data set; or
a type of data packets, received by the first communications device, in the first data set.

86. The communications device according to claim 84 or 85, wherein the communications device further comprises:
a third transmitting module, configured to transmit fifth information to the fourth communications device, wherein the fifth information is used for instructing to handle the first data set.

87. The communications device according to claim 86, wherein the fifth information comprises one or more of following:
a sequence number of the first data set;
indication information for instructing the fourth communications device to discard a data packet in the first data set; or
indication information for instructing the fourth communications device to retransmit a data packet in the first data set.

88. The communications device according to any one of claims 84 to 87, wherein the communications device further comprises:
a third receiving module, configured to receive third indication information, wherein the third indication information is used for instructing the first communications device to report the fourth information.

89. The communications device according to any one of claims 84 to 88, wherein the fourth communications device is an AF, a terminal device, an access network device, or a network element in a core network.

90. The communications device according to any one of claims 66 to 89, wherein the first communications device is one of following: an access network device, a UPF, or a terminal device.

91. A communications device, wherein the communications device is a second communications device, and the communications device comprises:
a first transmitting module, configured to transmit first information to a first communications device, wherein the first information is used for indicating an association relationship between data packets in a first data set.

92. The communications device according to claim 91, wherein the first information comprises forward error correction FEC-related information of the first data set.

93. The communications device according to claim 91 or 92, wherein the first information is associated with one or more of following:
FEC type information of the first data set;
information about allowable packet loss for the first data set; or
information about a data packet in the first data set.

94. The communications device according to any one of claims 91 to 93, wherein the first information comprises one or more of following:
FEC type information of the first data set;
an allowable quantity of lost packets for the first data set;
an allowable packet loss size for the first data set;
a quantity of data packets required to be successfully transmitted to a receive end in the first data set;
a size of data packets required to be successfully transmitted to a receive end in the first data set;
a ratio of an allowable quantity of lost packets for the first data set to a total quantity of data packets in the first data set;
a ratio of an allowable packet loss size for the first data set to a total size of all data packets in the first data set;
a ratio of a quantity of data packets required to be successfully transmitted to a receive end in the first data set to a total quantity of data packets in the first data set;
a ratio of a size of data packets required to be successfully transmitted to a receive end in the first data set to a total size of all data packets in the first data set;
a quantity of data packets in the first data set;
a size of data packets in the first data set;
type information of data packets in the first data set;
sequence numbers of data packets in the first data set;
information indicating importance of data packets in the first data set;
information indicating a mapping relationship between original and repair data packets in the first data set; or
boundary information between original and repair data packets in the first data set.

95. The communications device according to any one of claims 91 to 94, wherein the first information is acquired in one or more of following modes:
the first information being transmitted to the first communications device from a second communications device;
the first information being acquired by the first communications device based on local configuration information of the first communications device;
the first information being acquired by the first communications device by querying subscription information; or
the first information being acquired by the first communications device by reading a header of a data packet in the first data set.

96. The communications device according to any one of claims 91 to 95, wherein the first transmitting module is configured to:
transmit a first message to the first communications device, wherein the first message is used to request handling of the first data set, and the first message comprises the first information.

97. The communications device according to claim 96, wherein the first message further comprises one or more of following:
second information for enabling the first communications device to handle the first data set; or
third information for indicating time window information for handling the first data set.

98. The communications device according to claim 96 or 97, wherein FEC coding of the first data set is static FEC coding or semi-static FEC coding.

99. The communications device according to any one of claims 96 to 98, wherein the first information is acquired by using a control plane.

100. The communications device according to any one of claims 91 to 95, wherein the communications device further comprises:
a second transmitting module, configured to transmit first indication information to the first communications device, wherein the first indication information is used for instructing to handle the first data set.

101. The communications device according to claim 100, wherein the communications device further comprises:
a third transmitting module, configured to transmit second indication information to the first communications device, wherein the second indication information is used for determining a target service flow corresponding to the first data set.

102. The communications device according to claim 100 or 101, wherein the communications device further comprises:
an adding module, configured to add the first information to a header of a data packet in the first data set; and
a fourth transmitting module, configured to transmit, to a third communications device, the data packet to which the first information is added.

103. The communications device according to any one of claims 100 to 102, wherein FEC coding of the first data set is dynamic FEC coding.

104. The communications device according to any one of claims 100 to 103, wherein the first information is acquired by using a user plane.

105. The communications device according to any one of claims 91 to 104, wherein the first information is used for handling of the first data set.

106. The communications device according to claim 105, wherein
in a case that a quantity of valid data packets from the first data set is not sufficient to support successful decoding of the first data set, the first data set is discarded; and/or
in a case that a part of data packets in the first data set is capable of supporting successful decoding of the first data set, the part of the data packets is transmitted; and/or
in a case that a part of data packets in the first data set is capable of supporting successful decoding of the first data set, another data packet in the first data set that is different from the part of the data packets is not transmitted.

107. The communications device according to claim 106, wherein the part of the data packets comprises one or more of following: data packets, the number of which is greater than or equal to a first threshold; or data packets, the size of which meets a second threshold.

108. The communications device according to any one of claims 91 to 107, wherein the first communications device is one of following: an access network device, a UPF, or a terminal device.

109. The communications device according to any one of claims 91 to 108, wherein the second communications device is one of following: an AF, a terminal device, or a network element in a core network.

110. A communications device, wherein the communications device is a first communications device, and the communications device comprises:
a transmitting module, configured to transmit fourth information to a fourth communications device, wherein the fourth information is used for indicating packet loss information for a first data set.

111. The communications device according to claim 110, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packets, received by the first communications device, in the first data set; or
a type of data packets, received by the first communications device, in the first data set.

112. The communications device according to claim 110 or 111, wherein the communications device further comprises:
a receiving module, configured to receive a first request message, wherein the first request message is used to request the first communications device to measure the packet loss information for the first data set.

113. The communications device according to claim 112, wherein the first request message comprises one or more of following:
indication information for requesting to measure the packet loss information;
information about a target data flow corresponding to the first data set;
time window information for measuring the packet loss information;
period information for reporting the packet loss information;
threshold information for reporting the packet loss information; or
indication information from the fourth communications device.

114. The communications device according to any one of claims 110 to 113, wherein the fourth information is transmitted by using one or more of following: an NEF, a PCF, an SMF, or an AMF.

115. The communications device according to claim 114, wherein the fourth information is transmitted by using a control plane.

116. The communications device according to any one of claims 110 to 113, wherein the fourth information is carried in a header of a GTP-U data packet in the first data set, or the fourth information is carried in a header of an application layer data packet in the first data set.

117. The communications device according to any one of claims 116, wherein the fourth information is transmitted by using a user plane.

118. The communications device according to any one of claims 110 to 117, wherein the first communications device is an access network device or a UPF.

119. The communications device according to any one of claims 110 to 118, wherein the fourth communications device is an AF, a terminal device, an access network device, or a network element in a core network.

120. A communications device, wherein the communications device is a second communications device, and the communications device comprises:
a receiving module, configured to receive fourth information transmitted by a first communications device, wherein the fourth information is used for indicating packet loss information for a first data set.

121. The communications device according to claim 120, wherein the fourth information comprises one or more of following:
a sequence number of the first data set;
a quantity of data packets, received by the first communications device, in the first data set;
a size of data packets, received by the first communications device, in the first data set;
a quantity of data packets, failing to be received by the first communications device, in the first data set;
a size of data packets, failing to be received by the first communications device, in the first data set;
a ratio of a quantity of data packets, failing to be received by the first communications device, in the first data set to a total quantity of data packets in the first data set;
a ratio of a size of data packets, failing to be received by the first communications device, in the first data set to a total size of all data packets in the first data set;
sequence numbers of data packets, received by the first communications device, in the first data set; or
a type of data packets, received by the first communications device, in the first data set.

122. The communications device according to claim 120 or 121, wherein the communications device further comprises:
a first transmitting module, configured to transmit a first request message to the first communications device, wherein the first request message is used to request the first communications device to measure the packet loss information for the first data set.

123. The communications device according to claim 122, wherein the first request message comprises one or more of following:
indication information for requesting to measure the packet loss information;
information about a target data flow corresponding to the first data set;
time window information for measuring the packet loss information;
period information for reporting the packet loss information;
threshold information for reporting the packet loss information; or
indication information from the fourth communications device.

124. The communications device according to any one of claims 120 to 123, wherein the fourth information is transmitted by using one or more of following: an NEF, a PCF, an SMF, or an AMF.

125. The communications device according to claim 124, wherein the fourth information is transmitted by using a control plane.

126. The communications device according to any one of claims 120 to 123, wherein the fourth information is carried in a header of a GTP-U data packet in the first data set, or the fourth information is carried in a header of an application layer data packet in the first data set.

127. The communications device according to claim 126, wherein in a case that the fourth information is carried in the header of the GTP-U data packet in the first data set, the communications device further comprises:
an adding module, configured to add the fourth information to the header of the application layer data packet in the first data set after reading the fourth information carried in the header of the GTP-U data packet in the first data set; or
a second transmitting module, configured to transmit the fourth information by using one or more of an NEF, a PCF, or an SMF after reading the fourth information carried in the header of the GTP-U data packet in the first data set.

128. The communications device according to claim 126 or 127, wherein the fourth information is transmitted by using a user plane.

129. The communications device according to any one of claims 120 to 128, wherein the first communications device is an access network device or a UPF.

130. The communications device according to any one of claims 120 to 129, wherein the fourth communications device is an AF, a terminal device, an access network device, or a network element in a core network.

131. A communications device, comprising a memory and a processor, wherein the memory is configured to store a program, and the processor is configured to invoke the program in the memory to cause the communications device to execute the method according to any one of claims 1 to 25.

132. A communications device, comprising a memory and a processor, wherein the memory is configured to store a program, and the processor is configured to invoke the program in the memory to cause the communications device to execute the method according to any one of claims 26 to 44.

133. A communications device, comprising a memory and a processor, wherein the memory is configured to store a program, and the processor is configured to invoke the program in the memory to cause the communications device to execute the method according to any one of claims 45 to 54.

134. A communications device, comprising a memory and a processor, wherein the memory is configured to store a program, and the processor is configured to invoke the program in the memory to cause the communications device to execute the method according to any one of claims 55 to 65.

135. An apparatus, comprising a processor configured to invoke a program from a memory, to cause the apparatus to execute the method according to any one of claims 1 to 65.

136. A chip, comprising a processor, configured to invoke a program from a memory to cause a device installed with the chip to execute the method according to any one of claims 1 to 65.

137. A computer-readable storage medium, wherein the computer-readable storage medium stores a program, and the program causes a computer to execute the method according to any one of claims 1 to 65.

138. A computer program product, comprising a program that causes a computer to execute the method according to any one of claims 1 to 65.

139. A computer program, wherein the computer program causes a computer to execute the method according to any one of claims 1 to 65.
